# EUROPEAN PATENT SPECIFICATION

(11) **EP 0 992 158 B1**
(45) Date of publication and mention of the grant of the patent: **14.04.2004**
(21) Application number: 98932945.3
(22) Date of filing: 29.06.1998
(51) Int. Cl.: H04N 7/08, H04N 7/085

(54) **METHOD AND SYSTEM FOR ENCODING DATA IN THE HORIZONTAL OVERSCAN PORTION OF A VIDEO SIGNAL**
VERFAHREN UND VORRICHTUNG ZUR KODIERUNG VON DATEN IN DEM HORIZONTALEN ÜBERABTASTUNGSTEIL EINES VIDEOSIGNALS
PROCEDE ET SYSTEME POUR LE CODAGE DE DONNEES DANS LA PARTIE DE SURBALAYAGE HORIZONTAL D'UN SIGNAL VIDEO

(30) Priority: 30.06.1997 US 885385
(43) Date of publication of application: 12.04.2000
(73) Proprietor: MICROSOFT CORPORATION, Redmond, Washington 98052-6399 (US)
(72) Inventor: DEL CASTILLO, Leonardo, Redmond, WA 98052 (US)
(74) Representative: McCarthy, Denis Alexis
(86) International application number: PCT/US1998/013482
(87) International publication number: WO 1999/000979

(56) References cited:
- EP-A- 0 710 022
- WO-A-92/19073
- US-A- 4 729 563
- US-A- 4 771 344
- US-A- 4 807 031

## Description

### REFERENCE TO RELATED APPLICATIONS

This application is a continuation-in-part of U.S. Application Serial No. 08/795,710 entitled "PROTOCOL FOR A WIRELESS CONTROL SYSTEM" filed on February 4, 1997, which is assigned to a common assignee.

### TECHNICAL FIELD

The present invention relates to wireless communication systems and, more particularly, relates to encoding data in the horizontal overscan portion of a video signal.

### BACKGROUND OF THE INVENTION

A variety of consumer products available today rely upon the use of wireless communication. Examples include cordless phones, garage door openers, remotely controlled appliances, and remotely controlled toys. A common motivation that drives manufacturers of these and similar products is minimizing the cost associated with providing the wireless communication capability. Thus, techniques for minimizing the cost of radio equipment for transmitting and receiving radio frequency signals while maintaining reliable communication are continuously explored.

Interactive toys, games, and learning products for the home could be particularly useful applications of wireless communication technology. Wireless systems eliminate the use of wire-line communication links and, therefore, are preferable for many household applications. For example, wireless toys, games, and learning products eliminate wires that small children might tangle or pull free, or that dogs might chew. Wireless products also avoid the need for universal plugs or adapters and allow a large number of wireless devices to be controlled by a single controller without requiring a large terminal port for plugging-in the controlled devices. Wireless communication links are therefore safer, more robust, more versatile, and in many cases less expensive than wire-line communication links.

There are a number of often competing objectives in designing wireless products, such as toys, games, and learning products, for use in a home environment. First, the entire system should be priced within an acceptable range for a children's entertainment product. Furthermore, because each child may desire new controlled devices over time, the cost of each controlled device should be as low as possible. This means that the controlled devices should include inexpensive wireless communication equipment, such as conventional amplitude modulation (AM) radio equipment and digital data handling equipment.

Second, it is advantageous for several wireless devices to be controlled simultaneously by a single controller. In the context of a wireless toy environment, this allows several children to interact with their own toys at the same time. For example, one child may interact with a "FRED" toy, while another interacts with a "WILMA" toy, while yet another interacts with a "DINO" toy, etc. In addition, it is advantageous for a variety of different toys to be available so that children have a selection of toys to choose from and collect. Moreover, in a progressive learning system, it is advantageous to have a series of toys associated with different skills so that a child can progress through the skills learned by interacting with the different toys.

Third, it is advantageous for the controller and the controlled devices to be operable for engaging in bidirectional communications. This is particularly useful in an interactive learning environment in which a child interacts with a controlled device. For example, the controller may direct a controlled doll to say, "Please squeeze my left hand." The controlled doll may then transmit the child's response back to the controller, which responds accordingly. For example, if the child squeezes the doll's right hand, the controller directs the doll to say, "No that's my right hand, please squeeze my left hand."

A fourth consideration is forward compatibility. This means that the original controller can be used to operate future versions of controlled devices. For example, an interactive toy product may initially be introduced with only one or two controlled devices (e.g., "FRED" and "WILMA"). But over the next several years, dozens of new controlled products may be released to upgrade the system (e.g., "DINO," "BAM-BAM," etc.). Forward compatibility allows the new controlled devices to be operated by the original controller.

In addition, control data must be provided to the controller, which in turn transmits the control data to the controlled devices through a local wireless communication link. Although the control data may be generated locally, for example by a computer located in close proximity to the controller, it is also desirable to transmit the control data from a remote location using a broadcast-level communication link, such as an air-wave or cable television signal. In particular, it would be advantageous to broadcast the control data along with a standard video signal for driving a display device, such as a television or monitor. In this manner, the controlled devices may be caused to operate in synchronism with the programming information defined by the video signal. For example, a controlled device may operate as a character in a video program displayed on the television or monitor.

In order to effectively broadcast the control data in connection with a video signal, several often competing objectives should be attained. First, as noted above, the control data should be temporarily synchronized with the video signal so that the actions of the controlled devices operate in synchronism with the programming information displayed on the television or monitor. Second, the control data should be easily concatenated with a standard video signal for transmission in a variety of broadcast media using standard equipment. Third, the control data should not interfere with the video signal or visibly disrupt the display of the video signal. Fourth, sufficient bandwidth should be provided in the upstream communication link (e.g., a broadcast-level communication link) to fully satisfy the bandwidth requirements of the downstream communication link (e.g., local wireless communication link). In addition, it would be advantageous for additional bandwidth to be available in the upstream communication link for transmitting additional information for other data sinks to provide advertising, subscription, or emergency warning services, such as e-mail, foreign language subtitling, telephone pages, weather warnings, configuration data for a set-top box, and so forth. It would also be advantageous for the bandwidth of the upstream communication link to be adjustable to meet the cost and performance needs of a wide variety of consumers.

As with the downstream wireless communication link, the protocol for the upstream communication link should be addressable so that several wireless controlled devices, as well as other data sinks, may be controlled simultaneously. The protocol should also be error tolerant and accommodate forward compatibility for future wireless controlled devices and other services that may be provided through the broadcast media. All of these attributes should be implemented at a cost that is feasible fo deploy in connection with system that is primarily intended to be a children's entertainment product

Broughton et al., U.S. Patent No. 4,807,031, describes a system for controlling a remote device, such as a toy car, with control data transmitted within the visible area by a video signal as that signal drives a display device The system described by Broughton relies on luminance modulation in the visible area of the of the video signal to transmit the control data.

There is, therefore, a need for a method and system for encoding control data for wireless controlled devices in connection with a video signal so that the actions of the controlled devices operate in synchronism with the programming information defined by the video signal. There is a further need for a method and system for encoding additional data in connection with the video signal for providing services, such as e-mail, intercom capability, foreign language subtitling, telephone pages, weather warnings, configuration data for a set-top box, and so forth. There is a further need tor a protocol for encoding data in connection with a video signal that is be addressable forwardly compatible, error tolerant, and feasible to deploy in connection with a system that is primarily intended to be a children's entertainment product.

### SUMMARY OF THE INVENTION

The present invention meets the needs described above by providing a method and system for encoding control data in the horizontal overscan portion of a video signal. Because the control data is concatenated with the video signal on a line-by-line basis, the control data is temporarily synchronized with the underlying video signal. This permits the contiolled devices, such as wireless mechanical characters, to behave as characters in a scene defined by the programming information of the video signal A protocol is defined for the encoded data that is addressable, forwardly compatible, error tolerant, and feasible to deploy in connection with a system that is primarily intended to be a children's entertainment product. The bandwidth of the communicanon link defined by the encoded data is adjustable to meet the cost and performance needs of a wide variety of consumers Sufficient bandwidth is available to control several devices and to provide additional advertising, subscription, or emergency warning services, such as e-mail, foreign language subtitling intercom capability, telephone pages, weather warnings, configuration data for a set-top box, and so forth.

Generally described, the invention provides a method for encoding control data in a video signal that includes a series of frames that each include a number of lines. The encoded data are concatenated with the lines of the video signal to create an encoded video signal, which is configured to define content data in association with each frame. The content data is configured to define a first address associated with a first device, device-specific control data for the first device, a second address associated with a second device, and device-specific control data for the second device. In response to the first address, the device-specific control data for the first device are routed to the first device and the actions of the first device are controlled accordingly. Similarly, in response to the second address, the device-specific control data for the second device are routed to the second device, and the actions of the second device are controlled accordingly.

Preferably, the encoded data are defined by line signals located in the horizontal overscan portion of a video signal. Specifically, each line signal may be a pre-visible pulse located between the color burst portion and the visible raster portion of a horizontal scan line of the video signal. Each pulse may define a single bit of the encoded data, in which case the encoded data of each field of a two-field interlaced frame of the video signal may define one 7-bit signal detection word and 13 16-bit content words. To increase the bandwidth of the encoded data transmission, each line signal may include both a pre-visible pulse and a post-visible pulse located after the visible raster portion and before the horizontal blanking interval. To further increase the bandwidth of the encoded data transmission, each pulse may be modulated to define several bits.

The video signal typically defines programming information including a scene displayed on a display device. The device-specific control data for the first device typically includes voice and motor control data that causes the first device to behave as a character in the scene displayed on the display device. The device-specific control data for the second device may be voice or motor control data that causes the second device to behave as a second character in the scene displayed on the display device, electronic mail for a transmission to a computer system, intercom information for transmission to an intercom system, telephone paging information for transmission to a paging system, or language translation information, advertising information, subscription information, or emergency warning information displayed on the display device. Many other specific applications will be apparent to those skilled in the art.

The addressing scheme for the device-specific control data implements a versatile and extensible packet-based data transmission format. For example, the first address may be a first start-packet short address word for a first controlled device, and the second address may be a second start-packet short address word for a second controlled device. In this case, the second start-packet short address word may be interpreted as an end-packet short address word for the first controlled device.

In addition, the first address may define a start-packet begin-long-address word. In this case, the content data also define a first occurrence of a long address associated with the first device, and a start-packet end-long-address word associated with the first device, device-specific control data for the first device.

According to an aspect of the invention, the encoded data may include signal detection words and content words. Each signal detection word and each content word may include data bits and error correction bits that are used to correct errors in the data bits. Specifically, the error correction bits may define a correction sequence that allows a single-bit error in the data bits to be detected and corrected. Each signal detection word may include four data bits and three error correction bits, and each content word may include nine data bits and seven error correction bits.

According to another aspect of the invention, a signal detection word may be encoded into each frame of the video signal such that a consecutive series of the signal detection words defines a dynamic validation sequence. For this sequence, each signal detection word varies in at least two bits from the immediately preceding signal detection word. For example, the dynamic validation sequence transmitted in consecutive fields of a two-field interlaced frame of the video signal may include the binary representation of 8, 1, 10, 3, 12, 5, 14, and 7.

The invention also provides an encoded video signal, which is created according to the method described above, and a system for creating and using the encoded video signal. The system includes a video data encoder that is functionally connected to a video source that provides a video signal, such as an NTSC television signal. The video data encoder receives the video signal, which includes a series of frames that each include a number of lines. The video data encoder includes means for creating the encoded video signal, such means defining at least one content word, and for encoding data in the horizontal overscan portion of the video signal, as described above.

The video data encoder is preferably functionally connected to data decoder that receives the encoded video signal from the video data encoder. The data decoder detects the presence of the signal detection data, extracts the content data from the encoded video signal, and assembles the content data into a serial data communication signal. The data decoder is functionally connected to a data error processor that receives the serial data communication signal from the data decoder. The data error processor parses the serial data communication signal into data bits and error corrections bits, analyzes the error correction bits to detect errors in the data bits, corrects detected errors in the data bits, and assembles the corrected data bits into an error corrected data stream.

The data error processor is functionally connected to a protocol handler that receives the error corrected data stream from the data error processor. The protocol handler detects a first start-packet short address word associated with a first device and, in response, begins the routing of subsequently received device-specific control data to the first device. The protocol handler also detects a second start-packet short address word associated with the second device and, in response, begins the routing of subsequently received device-specific control data to the second device. The protocol handler also interprets the second start-packet short address word as a first end-packet short address word associated with the first device and, in response, discontinues the routing of subsequently received device-specific control data to the first device.

The protocol handler also detects a start-packet start-long-address word, detects a long address associated with a third device, detects a start-packet end-long-address word, and begins the routing of subsequently received device-specific control data to the third device. To end the transmission to the third device, the protocol handler detects a further address word and, in response, discontinues the routing of subsequently received device-specific control data to the third device.

Preferably the video encoder includes a memory in which a plurality of machine instructions defining a parent application are stored, and a display. The means for creating the encoded video signal preferably include a processor that is coupled to the memory to access the machine instructions, and to the display. The processor executes the machine instructions and thereby implements a plurality of functions, including concatenating encoded data with lines of a video signal to create the encoded video signal, such that the encoded data is configured to define the at least one content word. In another embodiment, the processor transmits the encoded data to the first and second devices.

Still another aspect of the invention is directed to a computer storage medium storing computer executable instructions, that when executed by a processor, perform steps generally consistent with the steps of the method described above.

That the invention improves over the drawbacks of the prior art and accomplishes these advantages will become apparent from the following detailed description of the exemplary embodiments and the appended drawings and claims.

### BRIEF DESCRIPTION OF THE DRAWINGS

FIG. 1 is a block diagram of a duplex wireless control environment including a controller and a controlled device.
FIG. 2 is a block diagram of the personal computer that forms a part of the controller of FIG. 1.
FIG. 3 is a block diagram of a wireless modem that forms a part of the controller of FIG. 1.
FIG. 4 is a block diagram of a simplex wireless control environment including a controller and a controlled device.
FIG. 5 is a block diagram illustrating a system for creating a data stream including video data and encoded control data.
FIG. 6 is a block diagram illustrating the various components and processes that define a wireless modem that forms a part of the controller of FIG. 4.
FIG. 7 is a functional block diagram illustrating the various components and processes that define the controlled device of FIG. 4.
FIG. 8 is a functional block diagram of a system for creating and using an encoded video signal to control a plurality of data sinks.
FIG. 9A is a wave form diagram illustrating a data bit value "one" encoded in the horizontal overscan portion of a scan line of an encoded video signal.
FIG. 9B is a wave form diagram illustrating a data bit value "zero" encoded in the horizontal overscan portion of a scan line of an encoded video signal.
FIG. 10A is a diagram illustrating the location of data bits in a portion of a frame of an encoded video signal.
FIG. 10B is a diagram illustrating the location of data bits in two interlaced fields of a frame of an encoded video signal.
FIG. 11 is a message protocol diagram illustrating the format of the horizontal overscan data stream of an encoded video signal.
FIG. 12A is a message protocol diagram illustrating the format of short address content data of an encoded video signal.
FIG. 12B is a message protocol diagram illustrating the format of long address content data of an encoded video signal.
FIG. 13 is a logic flow diagram illustrating the operation of a video data detector in a system for creating and using an encoded video signal to control a plurality of data sinks.
FIG. 14 is a logic flow diagram illustrating the operation of a data error detector in a system for creating and using an encoded video signal to control a plurality of data sinks.
FIG. 15 is a logic flow diagram illustrating the operation of a protocol handler for short addresses in a system for creating and using an encoded video signal to control a plurality of data sinks.
FIG. 16 is a logic flow diagram illustrating the processing of short addresses in the protocol handler of FIG. 15.
FIG. 17 is a logic flow diagram illustrating the operation of a protocol handler for long addresses in a system for creating and using an encoded video signal to control a plurality of data sinks.
FIG. 18 is a logic flow diagram illustrating the processing of long addresses in the protocol handler of FIG. 17.

### DETAILED DESCRIPTION

An exemplary embodiment of the invention is a system for encoding control data into the horizontal overscan area of a video signal. Because the control data is concatenated with the video signal on a line-by-line basis, the control data is temporarily synchronized with the underlying video signal. This permits the controlled devices, such as wireless mechanical characters, behave as characters in a scene defined by the programming information of the video signal. The protocol for the encoded control data is addressable, forwardly compatible, error tolerant, and feasible to deploy in connection with a system that is primarily intended to be a children's entertainment product. The bandwidth of the communication link defined by the encoded data is adjustable to meet the cost and performance needs of a wide variety of consumers. Sufficient bandwidth is available to control several mechanical characters and to provide additional advertising, subscription, or emergency warning services, such as e-mail, foreign language subtitling, telephone pages, intercom capability, weather warnings, configuration data for a set-top box, and so forth.

### Exemplary Embodiment: The "REALMATION" System

The present invention may be deployed in a wireless communication environment that includes a controller (also referred to as a master device) that communicates with and controls one or more controlled devices (also referred to as slave devices) on a single radio-frequency (RF) communication channel. A specific embodiment of the invention is known as the "REALMATION" system. "REALMATION," derived from combining the words "realistic" and "animation," is descriptive of a new technology developed by Microsoft Corporation of Redmond Washington. A controller in a typical "REALMATION" system includes a computer system with a display device and a wireless modem that communicates with and controls one or more controlled devices, such as animated mechanical characters. The controller drives a display device to depict programming information, such as scenes of an audio/video presentation, while simultaneously transmitting control data, including voice coefficients and motion vectors, to one or more mechanical characters. The mechanical characters, in response to receiving the control data, move and talk as characters in the scenes depicted on the display device.

Microsoft Corporation is developing a "REALMATION" product line that includes two main components: a controller (i.e., master device) known as the "REALMATION CONTROLLER," and one or more controlled devices (i.e., slave devices) known as "REALMATION PERFORMERS." A controlled device may be specially designed for a specific industrial, educational, research, entertainment, or other purpose. For example, a controlled device such as the "BARNEY" dinosaur character is specially designed for a learning and entertainment system for small children. Each controlled device includes an RF receiver system for receiving, demodulating, and decoding signals transmitted by the controller. The signals transmitted by the controller contain control data, such as speech coefficients and motion vectors. The control data causes the controlled device to behave as a character in a scene depicted on a display device driven by the controller.

In a duplex environment, each controlled device may also include an RF transmitter system for encoding, modulating, and transmitting response signals back to the controller. These response signals may include test or receptor data defining status information concerning the controlled device. For example, a controlled device may include pressure or light sensitive receptors for receiving user input, such as squeezing or covering a part of the character. This is particularly useful in an interactive learning environment in which a child interacts with the controlled device. For example, the controller may direct a "BARNEY" controlled device to say, "Please squeeze my left hand." The controlled device may then transmit the child's response back to the controller, which responds accordingly. For example, if the child squeezes the controlled device's right hand, the controller may direct the controlled device to say, "No, that's my right hand, please squeeze my left hand."

The controller includes a data source that receives or generates video data and related control data so that one or more controlled devices may behave as characters in a scene depicted on a display device. To do so, the control system includes a wireless modem (or wireless modulator for a simplex environment), known as the "REALMATION LINK MASTER," and a display device, such as a television or a computer monitor. The data source may be an active device, such as computer system or an interactive television system, that generates the video data and related control data in real-time. Alternatively, the data source may be a passive device, such as a cable system, VCR, or television broadcast signal, that feeds a previously-created data stream including video data and encoded control data to the wireless modem. In this case, the wireless modem extracts the control data from the data stream, feeds the video data to the display device, and broadcasts the control data to one or more controlled devices.

In addition, the controller may be an intelligent system that is operative to generate, select, and combine video and control data from a number of sources in response to user input or other control signals. Regardless of the configuration, some type of data source provides a data stream including video and related control data, and the wireless modem extracts the control data from the video data, routes the video data to the display device, and broadcasts the control data to one or more controlled devices. To broadcast control data, the wireless modem encodes the control data into a special differential-pulse data modulation (DDM) format and transmits the DDM-encoded control data to the controlled devices. In addition, the wireless modem may receive DDM-encoded response signals from the controlled devices and decode the response signals.

The "REALMATION" product line may operate in a simplex environment or in a duplex environment. The operation of exemplary embodiments of the controller, the wireless modem (or modulator), and the controlled devices in these environments will be described in the context of programs running on microprocessor-based computer systems. Those skilled in the art will recognize that implementations of the present invention may include various types of program modules, use various programming languages, and be operable with various types of computing equipment. Additionally, although the descriptions of exemplary embodiments describe the controller as communicating with a controlled device over an RF communication channel, those skilled in the art will appreciate that substitutions to the RF communication channel can include other communication mediums such as fiber optic links, copper wires, infrared signals, etc.

Generally, a program, as defined herein, includes routines, subroutines, program modules, components, data structures, etc., that perform particular tasks or implement particular abstract data types. Moreover, those skilled in the art will appreciate that aspects of the present invention are applicable to other computer system configurations. These other computer system configurations include but are not limited to hand-held devices, multiprocessor systems, microprocessor-based or programmable consumer electronics, minicomputers, mainframe computers, and the like. Aspects of the present invention are also applicable within the context of a distributed computing environment, such as the Internet, in which tasks may be performed by remote processing devices that are linked through a communications network. In a distributed computing environment, program modules may be located in both local and remote memory storage devices.

In both the simplex and duplex environments, the controlled devices may be low-cost, animated, mechanical characters intended for use in an interactive learning and entertainment environment for children. At minimum, each controlled device includes a receiver system, a speech synthesizer, a speaker, a processor, and one or more servo motors. But a controlled device may include many other types of end effectors, such as light sources, heat source, inflatable devices, pumps, and so forth. Indeed, the protocol for the wireless control system is designed to be forwardly compatible with a wide range of controlled devices that may be developed in the future. In response to the receiver system receiving control data on a predefined RF channel, the processor decodes, interprets, and responds in a manner dictated by the contents of the control data. The response of the processor may include actuating one or more servo motors, providing input to the speech synthesizer, or activating any of the other end effectors provided in a particular controlled device.

In the duplex environment, the controlled devices may also include one or more sensor devices and a transmitter system. The sensor devices typically detect actions such as a child squeezing the hand, covering the eyes, or changing the position of the controlled device. By monitoring output signals from the sensors, the processor collects status information. Upon receiving a request from the controller, the processor transmits this sensor status information to the controller. In response to receiving the sensor status information, the controller may alter the animated audio/video presentation in a manner commensurate with the information. For example, in response to the action of a child covering the eyes of the controlled device, the audio/video presentation may switch to a game of peek-a-boo.

Thus, in the duplex environment, the controller engages in bidirectional communication with one or more controlled devices. Although the description of the duplex environment of the controller describes a program running on a personal computer and cooperating with another program running on a microprocessor-based communication device, those skilled in the art will recognize that other implementations, such as a single program running on a stand-alone platform, a distributed computing device equipped with radio communication equipment, or an interactive television system, may also suffice.

In the simplex environment, the controller engages in unidirectional communication with one or more controlled device. Although the description of the simplex environment of the controller describes a video cassette recorder (VCR) or a cable television box interfacing with a program running on a microprocessor-based communication device, those skilled in the art will recognize that other implementations, such as direct broadcasting signals, laser disc players, video tape players, computing devices accessing CD-ROM's, etc., may also suffice. In addition, the simplex environment may include integrating a VCR or similar device with a microprocessor-based communication device for operating in a stand-alone configuration.

The detailed description that follows is represented largely in terms of processes and symbolic representations of operations by conventional computer components, including a microprocessor unit (MPU), memory storage devices for the MPU, display devices, output control signals, and input devices. Furthermore, these processes and operations may utilize conventional computer components in a heterogeneous distributed computing environment, including remote file servers, remote computer servers, and remote memory storage devices. Each of these conventional distributed computing components is accessible by the MPU through a communications network.

The processes and operations performed by the computer include the manipulation of signals by a MPU or remote server and the maintenance of these signals within data structures resident in one or more of the local or remote memory storage devices. Such data structures impose a physical organization upon the collection of data stored within a memory storage device and represent specific electrical or magnetic elements. These symbolic representations are the means used by those skilled in the art of computer programming and computer construction to most effectively convey teachings and discoveries to others skilled in the art.

For the purposes of this discussion, a process is generally conceived to be a sequence of computer-executed steps leading to a desired result. These steps generally require physical manipulations of physical quantities. Usually, though not necessarily, these quantities take the form of electrical, magnetic, or optical signals capable of being stored, transferred, combined, compared, or otherwise manipulated. It is conventional for those skilled in the art to refer to these signals as bits, bytes, words, data, flags, variables, parameters, objects, properties, tags, types, identifiers, values, elements, symbols, characters, terms, numbers, points, records, images, files, or the like. It should be kept in mind, however, that these and similar terms are associated with appropriate physical quantities for computer operations, and that these terms are merely conventional labels applied to physical quantities that exist within and during operation of the computer.

It should also be understood that manipulations within the computer are often referred to in terms such as adding, comparing, receiving, sending, transmitting, replying, etc., which are often associated with manual operations performed by a human operator. The operations described herein are machine operations performed in conjunction with various inputs provided by a human operator or user that interacts with the computer.

In addition, those skilled in the art will understand that the programs, processes, methods, etc., described herein are not related or limited to any particular computer or apparatus, nor are they related or limited to any particular communication network architecture. Rather, various types of general purpose machines may be used with program modules constructed in accordance with the teachings described herein. Similarly, it may prove advantageous to construct a specialized apparatus to perform the method steps described herein. The specialized apparatus could consist of dedicated computer systems in a specific network architecture with hard-wired logic or programs stored in nonvolatile memory, such as read only memory, magnetic storage devices, or optical storage devices.

The communication between the master and slave devices will be described in the context of RF signal transmissions formed in accordance with amplitude modulation (AM) techniques. The RF signals are used to transfer symbolic representations of digital information from one device to another. The RF signals are generated by modulating the amplitude of a carrier signal in a predetermined manner based on the value of a symbolic representation of the digital data. Those skilled in the art will understand that a variety of communication technologies may be utilized for transmitting the information between these devices and that describing the use of AM techniques should not restrict the principles of any aspect of the present invention.

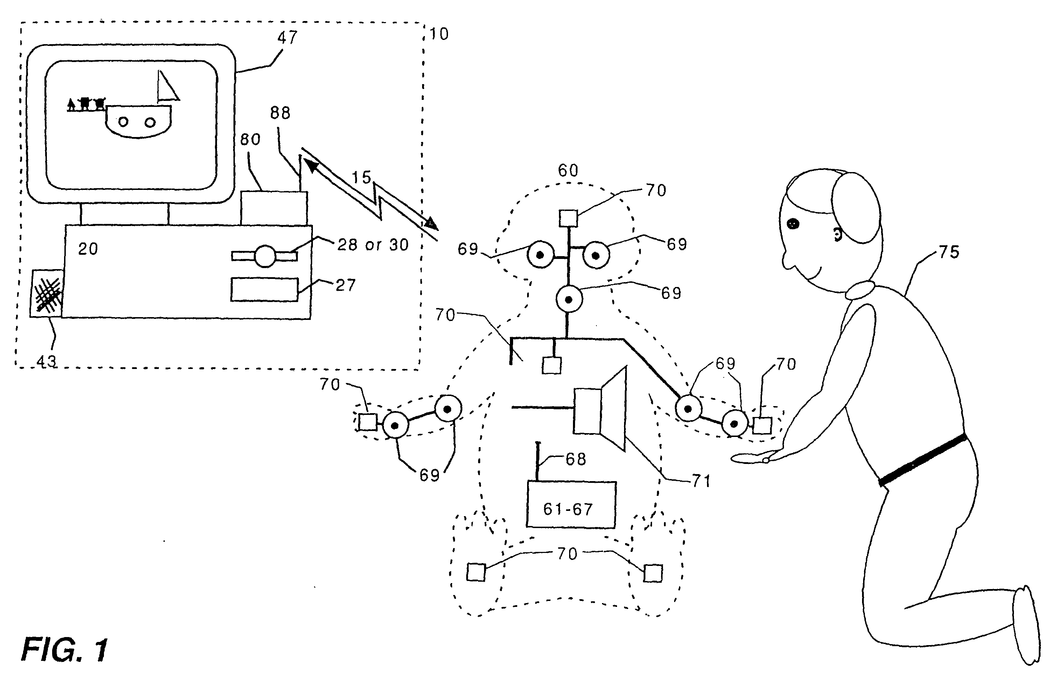

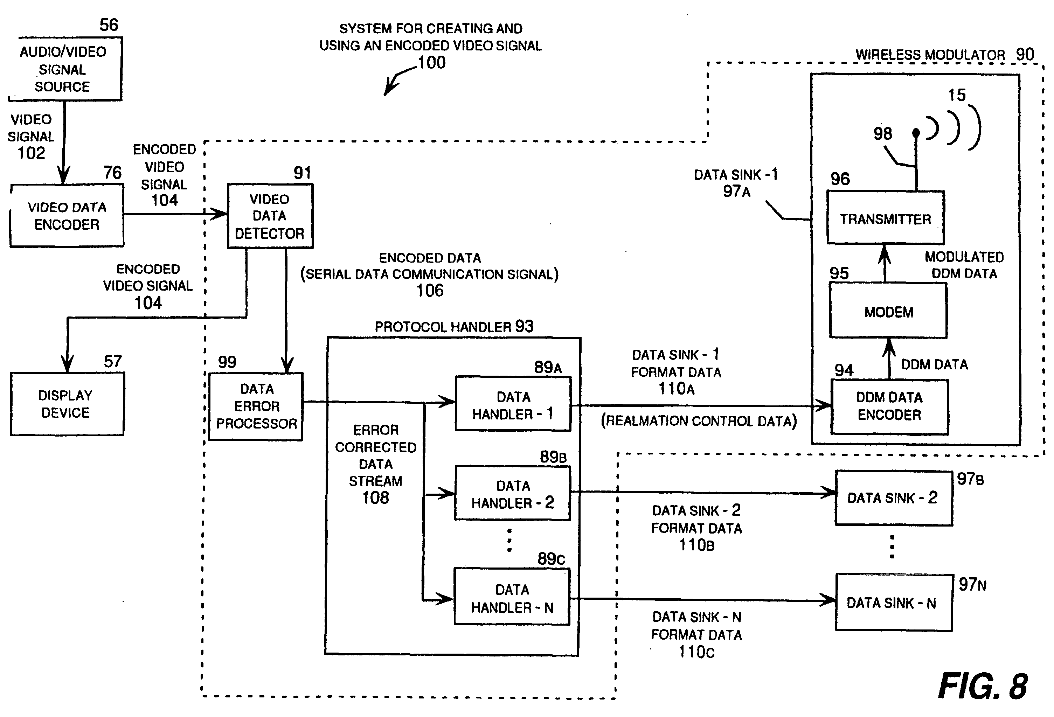

Referring now to the drawings, in which like numerals represent like elements throughout the several figures, aspects of the present invention and exemplary operating environments will be described. Reference is made to FIGS. 1-7 below to provide a description of suitable environments in which the invention may be implemented. Reference is then made to FIGS. 8-14 to describe the preferred wireless communication protocol for controllers and controlled devices in these environments.

### Duplex Environment

FIG. 1 illustrates an exemplary duplex environment for embodiments of the present invention. This duplex environment may be operated as an interactive learning and entertainment system for a child. The duplex environment includes a controller **10** that controls and interacts with a controlled device **60.** The controller **10** includes a conventional personal computer **20,** a wireless modem **80,** an antenna **88,** a speaker **43,** and a display device **47.** The personal computer **20** may include a hard disk drive **27,** a magnetic disk drive **28**, and/or an optical disk drive **30**.

During operation, the controller **10** drives an audio/video presentation on the display device **47** and the speaker **43**. In addition, the controller **10** transmits message packets that may include control data to the controlled device **60**. The control data typically includes voice synthesis coefficients and motor vectors for controlling the operation of the controlled device **60**. The process of transmitting the control data includes building a data stream using the proper protocol, modulating a carrier with the data stream, and emitting the modulated carrier as an RF signal from the antenna **88** over the RF communication channel **15**. More specifically, the controller **10** includes a multimedia personal computer system **20** and a wireless modem **80**. The computer system **20** passes the control data to the wireless modem **80** through a wired connection between the wireless modem **80** and the game (MIDI) port of the computer system **20**. The wireless modem **80** then builds the data stream using the proper protocol, modulates a carrier with the data stream, and emits the modulated carrier over the RF communication channel **15.**

The controlled device **60** receives the RF signals from the controller at the antenna **68**. The receiver system **61-67** processes the received RF signals to recover the control data. The controlled device **60** interprets the received control data and responds to the control data by controlling the operation of one or more servo motors **69** or other end effectors within the controlled device **60,** which includes providing speech data to be audibly presented by the speaker 71. Thus, transmitting the appropriate control data to the controlled device **60** causes the controlled device **60** to move and talk as though it is a character in the audio/video presentation.

The controlled device **60** also includes light sensors and touch sensors **70.** In response to a child touching, squeezing, or moving the controlled device **60** in an appropriate manner, the light sensors and/or touch sensors **70** within the controlled device **60** generate status information. In response to a command from the controller **10**, the controlled device **60** transmits the status information over the RF communication channel **15** back to the wireless modem **80** for processing by the controller **10.** In response to receiving and interpreting the status information, the controller **10** may alter the progression of the audio/video presentation in a manner commensurate with the status information.

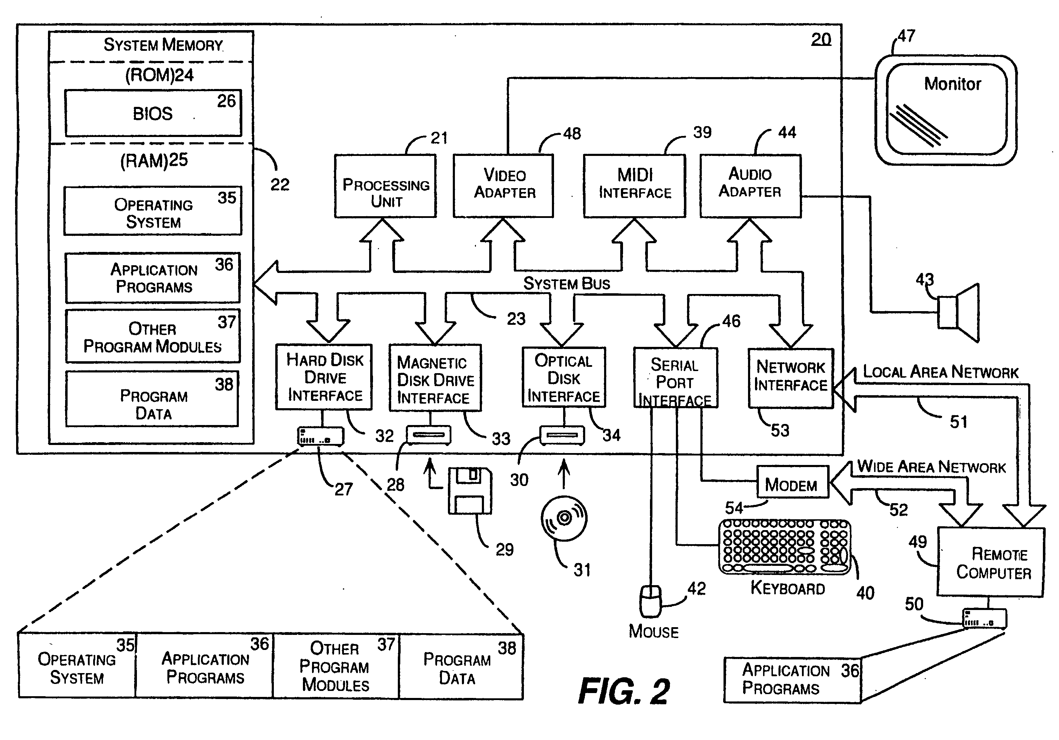

FIG. 2 illustrates an exemplary computer system for implementing the controller **10** in the duplex environment illustrated in FIG. 1. The exemplary computer system includes a conventional personal computer **20**, including a processor **21**, a system memory **22,** and a system bus **23** that couples the system memory to the processor **21**. The system memory **22** includes a read only memory (ROM) **24** and a random access memory (RAM) **25**. The ROM **24** provides storage for a basic input/output system **26** (BIOS), containing the basic routines that help to transfer information between elements within the personal computer **20**, such as during start-up. The personal computer **20** further includes a hard disk drive **27**, a magnetic disk drive **28** for reading from or writing to a removable disk **29**, and an optical disk drive **30** for reading a CD-ROM disk **31** or for reading from or writing to other optical media. The hard disk drive **27**, the magnetic disk drive **28**, and the optical disk drive **30** interface to the system bus **23** through a hard disk drive interface **32,** a magnetic disk drive interface **33**, and an optical drive interface **34,** respectively. The drives and their associated computer-readable media provide nonvolatile storage for the personal computer **20.** Although the description of computer-readable media above refers to a hard disk, a removable magnetic disk, and a CD-ROM disk, those skilled in the art will understand that other types of media that are readable by a computer, such as magnetic cassettes, flash memory cards, digital video disks, Bernoulli cartridges, and the like, may also be used in the exemplary operating environment.

A number of program modules may be stored in the drives **27-30** and RAM 25, including an operating system **35,** one or more application programs **36**, other program modules **37,** and program data **38.** A user may enter commands and information into the personal computer **20** through a keyboard **40** and pointing device, such as a mouse **42**. Other input devices (not shown) may include a microphone, a joystick, a track ball, a light pen, a game pad, a scanner, a camera, or the like. These and other input devices are often connected to the processor **21** through a serial port interface **46** that is coupled to the system bus, but may be connected by other interfaces, such as a game port or a universal serial bus (USB). A computer monitor **47** or other type of display device is also connected to the system bus **23** via an interface, such as a video adapter **48.** One or more speakers **43** are connected to the system bus via an interface, such as an audio adapter **44.** In addition to the monitor and speakers, personal computers typically include other peripheral output devices (not shown), such a printers and plotters.

The personal computer **20** may operate in a networked environment using logical connections to one or more remote computers, such as a remote computer **49**. Although only a memory storage device **50** has been illustrated in FIG. 2, the remote computer **49** may be a server, a router, a peer device, or other common network node, and typically includes many or all of the elements described relative to the personal computer **20**. The logical connections depicted in FIG. 2 include a local area network (LAN) **51** and a wide area network (WAN) **52.** These types of networking environments are commonplace in offices, enterprise-wide computer networks, intranets, and the Internet.

When used in a LAN networking environment, the personal computer **20** is connected to the LAN **51** through a network interface **53**. When used in a WAN networking environment, the personal computer **20** typically includes a modem **54** or other means for establishing communications over the WAN **52**, such as the Internet. The modem **54,** which may be internal or external, is connected to the system bus **23** via the serial port interface **46**. In a networked environment, program modules that may be accessed by the personal computer **20**, or portions thereof, may be stored in the remote memory storage device. The network connections shown are exemplary and other means of establishing communications links among the computers may be used.

The personal computer **20** contains a musical instrument digital interface (MIDI) adapter **39**, which allows the MPU **21** to control a variety of MIDI compatible devices (e.g., electronic keyboards, synthesizers, etc.) The MIDI adapter may also allow the MPU **21** to control a wireless modem **80**. The MIDI adapter operates by receiving data over the system bus **23**, formatting the data in accordance with the MIDI protocol, and transmitting the data over a MIDI bus **45**. The equipment attached to the MIDI bus detects the transmission of the MIDI formatted data and determines whether the data is to be accepted and processed or ignored. That is, the wireless modem **80** examines the data on the MIDI bus and only processes data that explicitly identifies the wireless modem **80** as the intended recipient. In response to receiving data, the wireless modem **80** may transmit the data, such as control data intended for one or more controlled devices, over the RF communication channel **15**.

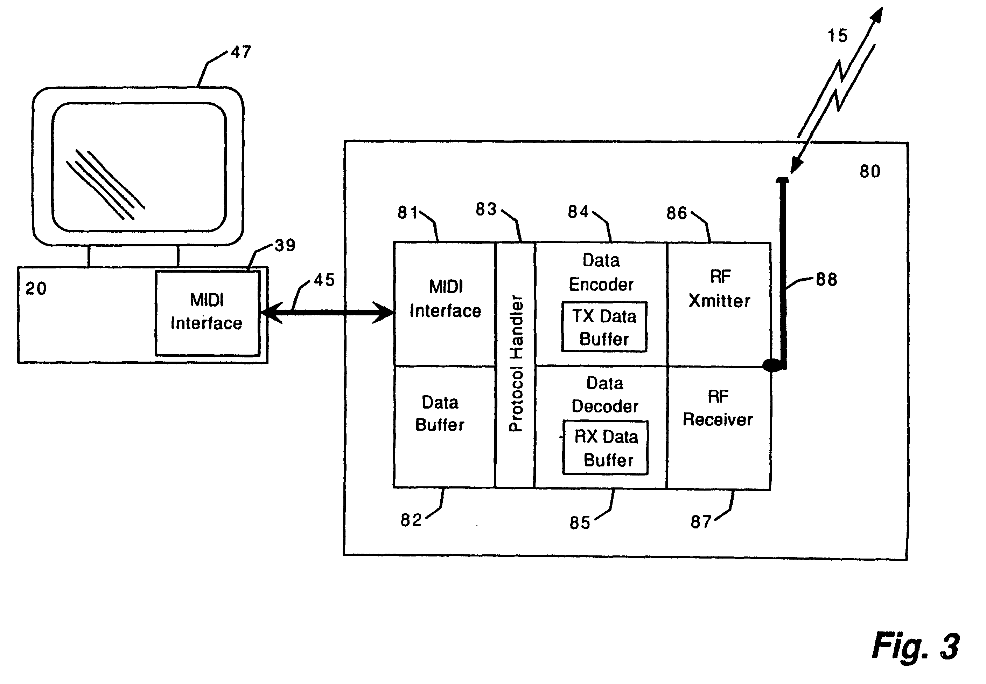

FIG. 3 is a block diagram illustrating the various components that define the wireless modem **80**. Initially, a program running on the computer **20** obtains control data by generating the data or retrieving the data from a storage media accessible to the computer **20.** In addition, the program may format the control data in accordance with a predefined protocol, such as a specific "REALMATION" protocol. Or in the alternative, the program may retrieve preformatted control data from a storage media. The program transfers the control data to the wireless modem **80** over the MIDI interface including the MIDI adapters **39** and **81** and the MIDI bus **45**. This process includes repackaging the control data into the MIDI format. Those skilled in the art will appreciate that the MIDI interface is only one of several possible interfaces that can be used to transfer control data between the computer **20** and the wireless modem **80**. Alternative interfaces include, but are not limited to, interfaces such as RS232, Centronix, and SCSI.

The protocol handler **83** receives the MIDI formatted data from the MIDI adapter **81** and removes the MIDI formatting to recover the control data. During this process, the protocol handler **83** may temporarily store the control data and or the MIDI formatted data in the data buffer **82**. The protocol handler **83** may also perform other manipulations on the control data in preparation for transmitting the data. Before transmitting the control data, the data encoder **84** encodes the control data and provides the encoded control data to the RF transmitter **86**. The RF transmitter uses the encoded control data to modulate a carrier and then transmits the modulated carrier over the RF communications channel **15** from the antenna **88.**

The wireless modem **80** may also receive signals carrying response data originating from one or more controlled devices **60** or other devices. The wireless modem **80** detects these signals at the antenna **88** and provides the signals to the RF receiver **87**. The RF receiver **87** demodulates the received signals, recovers the encoded response data, and provides the encoded response data to the data decoder **85**. The data decoder **85** decodes the encoded response data and provides the decoded response data to the protocol handler **83.** The protocol handler **83** formats the decoded response data into the MIDI format and transfers the MIDI formatted data to the computer **20** through the MIDI interface **81**. The protocol handler **83** and or the MIDI interface **81** may temporarily store the response data in the data buffer **82** during processing. Upon receiving the information at the MIDI Interface **39,** the computer **20** recovers the response data from the MIDI formatted data and then processes the response data.

### Simplex Environment

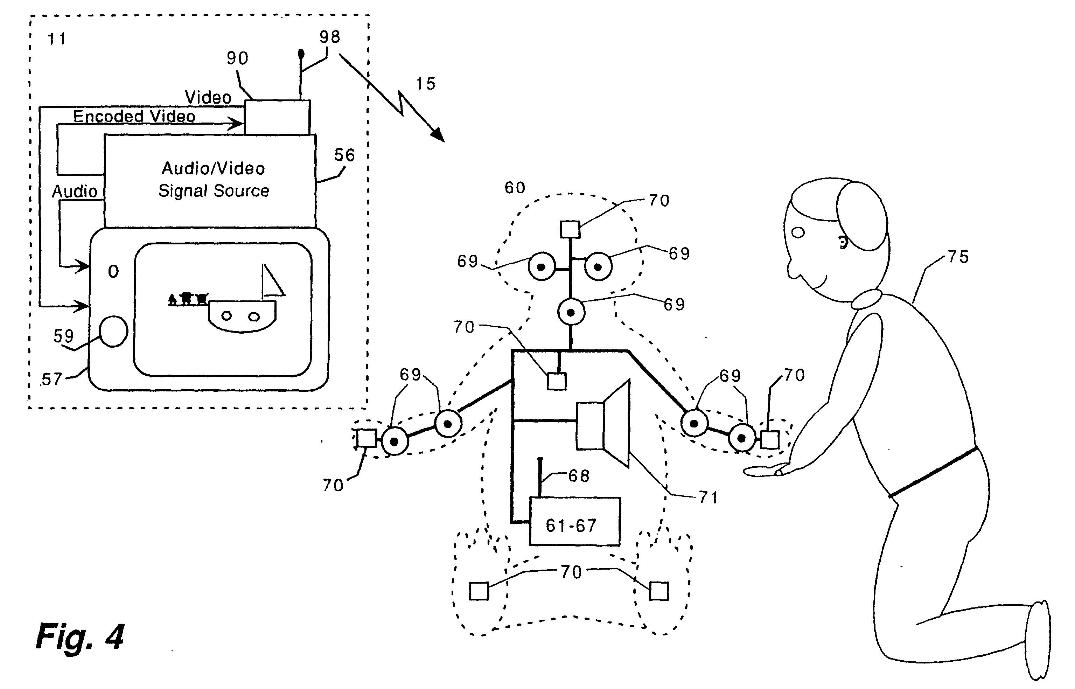

FIG. 4 illustrates an exemplary simplex environment for embodiments of the present invention. This simplex environment may be operated as a learning and entertainment system for a child. The simplex environment includes a controller **11** that controls a controlled device **60.** The controller **11** includes an audio/video signal source **56**, a wireless modulator **90**, an antenna **98**, and a display device **57** including a speaker **59**. The controller **11** transmits control data to the controlled device **60** via an antenna **98** and an RF communication channel **15.** To accomplish this task, the wireless modulator **90** interfaces with the audio/video signal source **56** and the display device **57** through a standard video interface. Over this standard video interface, the wireless modulator **90** receives a video signal encoded with control data (encoded video) from the audio/video signal source **56**. The wireless modulator **90** extracts the control data from the encoded video signal, and then transfers the control data to a controlled device **60** through the RF communication channel **15.**

In addition, the wireless modulator **90** passes the video signal to the display device **57**. The audio/video signal source **56** also interfaces with the speaker **59** in the display device **57**. Over this interface, the audio/video signal source **56** provides audio for an audio/video presentation. Thus, a child can observe the audio/video presentation on the display device **57** and the speaker **59** while the wireless modulator **90** transmits control data to one or more controlled device **60**. The reception of the control data causes the controlled device **60** to move and talk as though it is a character in the audio/video presentation.

There is no need to modify the encoded video signal before passing it to the display device **57**. Typically, the controller **11** receives the encoded video signal, which is a standard video signal that has been modified to include digital information in the horizontal overscan intervals of the scan lines, which are invisible to the display device **57**. Thus, the display device **57** can receive and display the encoded video signal without modification. The controller **11** only needs to extract the control data from the encoded video signal and generate the RF-modulated control signals for transmission to the controlled device **60**.

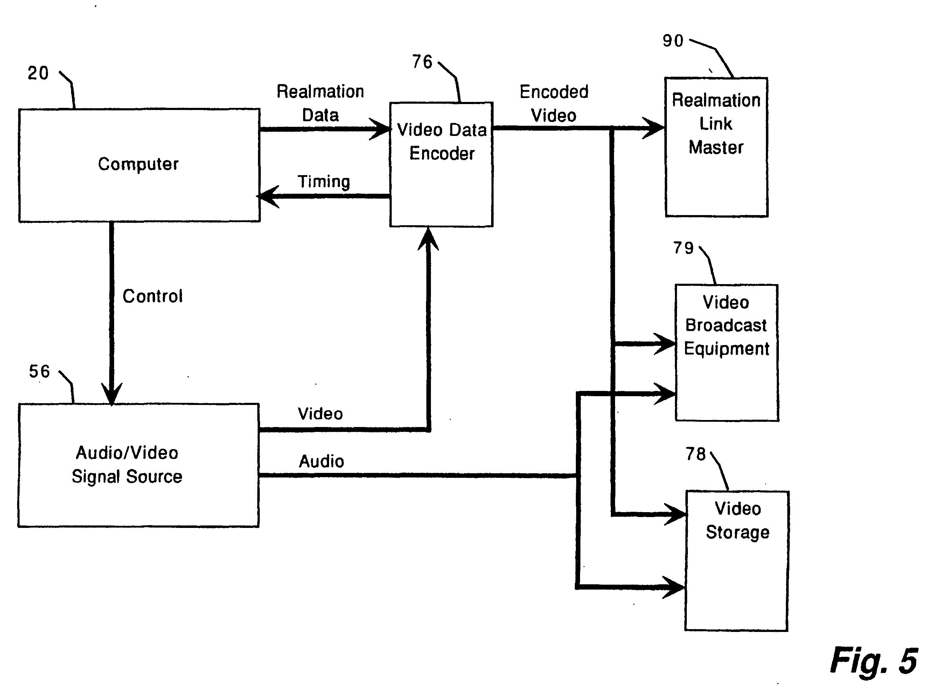

FIG. 5 is a block diagram illustrating a system for creating an encoded video data stream including video data and encoded control data. A variety of sources, including but not limited to, a video cassette recorder or player, a cable reception box, a TV tuner, a laser disc player, or a computer with a video output, may provide the encoded video. In FIG. 5, the computer system **20** interfaces with a video data encoder **76** and an audio/video signal source **56**. The audio/video signal source **56** provides two output signals: video and audio. These output signals may include live camera feeds, prerecorded playbacks, broadcast reception, etc. The computer system **20** controls the operation of the audio/video source **56** via a control signal. The control signal gates the output of the video and audio signals from the audio/video signal source **56.**

The computer system **20** also provides the control data, which is encoded onto the video signal. The computer system **20** transfers the control data and gates the video signal to the video data encoder **76**. The video data encoder combines the video signal and the control data by encoding the control data onto the video signal (i.e., generating an encoded video data stream). This encoding technique includes modulating the luminance of the horizontal overscan area of the video signal on a line-by-line basis. For example, the overscan area of each scan line may be modulated to represent a single control data bit. Furthermore, the field boundaries of the video signal provide a framing structure for the control data, in which each frame contains a fixed number of data words.

More specifically, each field of the video signal contains a pattern identification word consisting of four bits. The value of the pattern identification word in each contiguous field cyclically sequences through a defined set of values. The presence of the pattern identification word distinguishes an encoded video signal from a normal video signal. In a normal video signal, random noise appears in place of the pattern identification word. A decoder attempting to recover control data from an encoded video signal therefore determines whether the signal is an encoded video signal by detecting the presence of the pattern identification. Thus, the pattern identification word provides an additional layer of integrity to the recovered control data beyond that of simple checksum error detection.

The wireless modulator **90** receives the encoded video signal from the audio/video signal source **56** and recovers the control data from the encoded video signal. The wireless modulator **90** then transmits the control data to one or more controlled device, represented by the controlled device **60** shown in FIG. 4. Alternatively, video broadcast equipment **79** may receive the encoded video signal along with the audio signal and then broadcast the signals to one or more remotely located wireless modulators and/or wireless modems. In another alternative, video storage equipment **78** may receive the encoded video signal along with the audio signal and then store the signals in a storage medium for future retrieval.

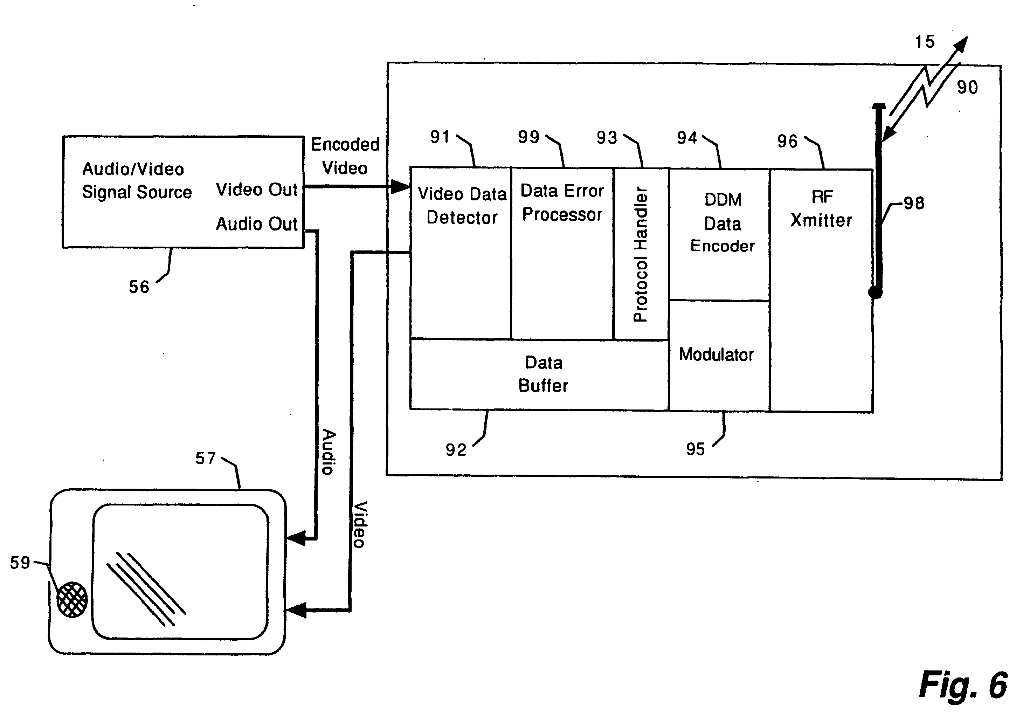

FIG. 6 is a block diagram illustrating the various components that define the wireless modulator **90**. Each of the components of the wireless modulator **90** may be implemented in hardware, software, or a combination of hardware and software. The video data detector **91** of the wireless modulator **90** receives a video signal, originating from an audio/video signal source **56**, and identifies whether the video signal is an encoded video signal. If the video data detector **91** detects the presence of the pattern identification word in the received video signal, then the video signal is an encoded video signal. If the signal is an encoded video signal, the video data detector **91** extracts the control data from the encoded video signal, provides the control data to the data error processor **99**, and simultaneously provides the encoded video signal to the display device **57.**

The data error processor **99** analyzes the control data to detect and attempt to correct any errors that may exist in the control data. After correcting any errors in the control data, the protocol handler **93** receives the recovered and verified control data and assembles message packets for transmission to one or more controlled devices, represented by the controlled device **60.** Upon assembling a message packet, the protocol handler **93** provides the message packet to the data encoder **94**. The data encoder **94** encodes the data and provides the encoded data to the RF transmitter **96**. The RF transmitter **96** receives the encoded data and modulates a predefined RF carrier (i.e., a predefined RF channel approved for use in connection with the wireless communication system) with the encoded data. The RF transmitter then transmits the modulated carrier through the antenna **98**. During processing of the control data, the various components of the computer system **20** or the wireless modulator **90** may temporarily store the control data in a data buffer, such as the representative data buffer **92.**

The display device **57** receives the video signal from the video data detector **91** or another source along with an audio signal from the audio/video signal source **56**. The display device **57** and the speaker **59** then display the audio/visual presentation defined by the video signal, typically including a series of scenes depicted on the display device **57** and the speaker **59,** in a conventional manner.

As noted previously, the audio/video presentation on the display device **57** and the control data that is transmitted from antenna **98** are synchronized so that the controlled device **60** behaves as a character in the scene depicted on the display device **57.** The processes of detecting the control data, correcting any errors, encoding the control data, and then modulating a carrier may introduce a slight delay. Nevertheless, embedding the control data within the video data in the encoded video signal effectively synchronizes the operation of the controlled device with the scene depicted on the display device **57**. In other words, the video signal received by the display device **57** and the control data transmitted from antenna **98** are synchronized because they are obtained from the same area of the original encoded video signal, in which context sensitive control data is embedded within a video signal. Thus, the encoded video signal may be separated in real-time into control data and related video data so that the controlled devices move and/or talk in a manner that relates to the audio/video presentation.

### Controlled Devices: "REALMATION" Performers

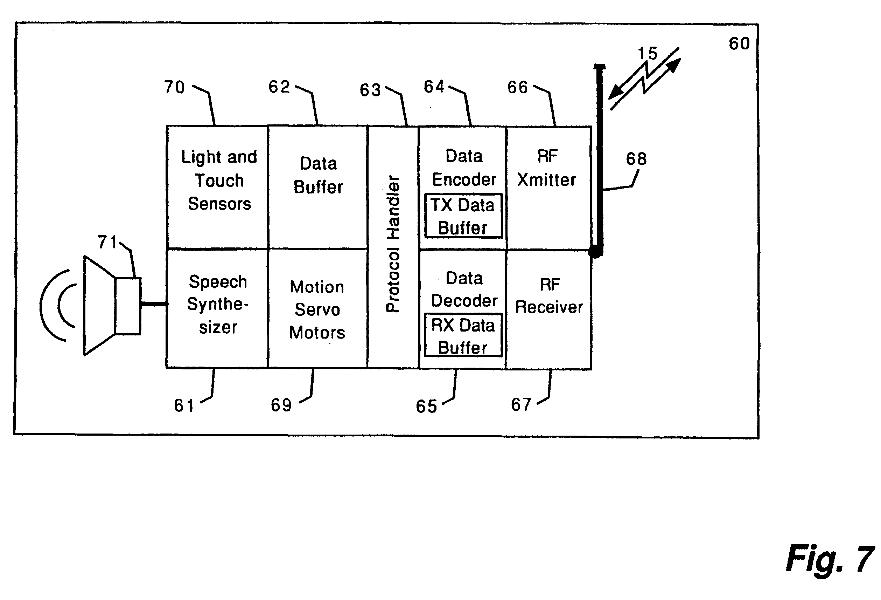

FIG. 7 is a functional block diagram illustrating the various components that define a controlled device **60**. Each of these components may be implemented in hardware, software, or a combination of hardware and software. Generally, the controlled device **60** includes a microprocessor, or some other type of other processor, for retrieving a program from a ROM, or some other type of non-volatile storage media, and executing the instructions of the program. The controlled device **60** may include hardware components such as an RF radio receiver **67,** an RF transmitter **66**, an antenna **68,** a readable and writable storage memory **62,** sensors **70,** servo motors **69,** a speech synthesizer **61**, and a speaker **71**.

The RF receiver **67** receives signals from the antenna **68**. The RF receiver **67** operates on the received signal by demodulating the carrier and recovering encoded control data. Next, the data decoder **65** receives and decodes the encoded control data. The protocol handler **63** receives the decoded control data output from the decoder **65** and interprets the control data. Based on the content of the control data, the protocol handler **63** routes control data to the appropriate devices, such as data buffers and end effectors within the controlled device **60**. Thus, if the control data contains motor movement vectors, one or more of the motion servo motors **69** receives the control data, which causes them to move in accordance with the motor movement vectors. Similarly, if the control data contains voice synthesis coefficients, the speech synthesizer **61** receives the voice synthesis coefficients, converts the voice synthesis coefficients into audio signals, and then provides the audio signals to the speaker **71**. Furthermore, the voice synthesis coefficients may be temporarily stored in data buffer **62** so that the controlled device **60** generates voice sounds based on the voice synthesis coefficients while the controlled device **60** transmits response data back to the controller.

The controlled device **60** may also include light sensors and touch sensors **70.** The sensors **70** may generate status information in response to variations in pressure, light, temperature, or other parameters. The controlled device **60** may transmit this status information to the controller **10** shown in FIG. 1. This process includes formatting the status information in the protocol handler **63**, encoding the status information in the data encoder **64**, modulating a carrier with the encoded status information in the RF transmitter **66**, and then transmitting the modulated carrier over the RF communications path **15** through the antenna **68.**

### Creating and Using an Encoded Video Signal

FIG. 8 is a functional block diagram of a system **100** for creating and using an encoded video signal to control a plurality of data sinks **97a-n.** The system **100** includes an audio/video signal source **56** that provides a video signal **102** to a video data encoder **76**. The audio/video signal source **56** may be any of a variety of conventional video sources, such as a video camera, a broadcast or cable television signal, a video tape player, the Internet transmitting a video signal, a computer generating a video signal, and so forth. The video signal **102** may be any type of video signal that includes a plurality of frames that each include a plurality of scan lines. For example, the video signal **102** may be a standard 525-line, two-field interlaced NTSC television signal that includes **30** frames per second, each frame including two fields of 262.5 interlaced lines, as is well known to those skilled in the art

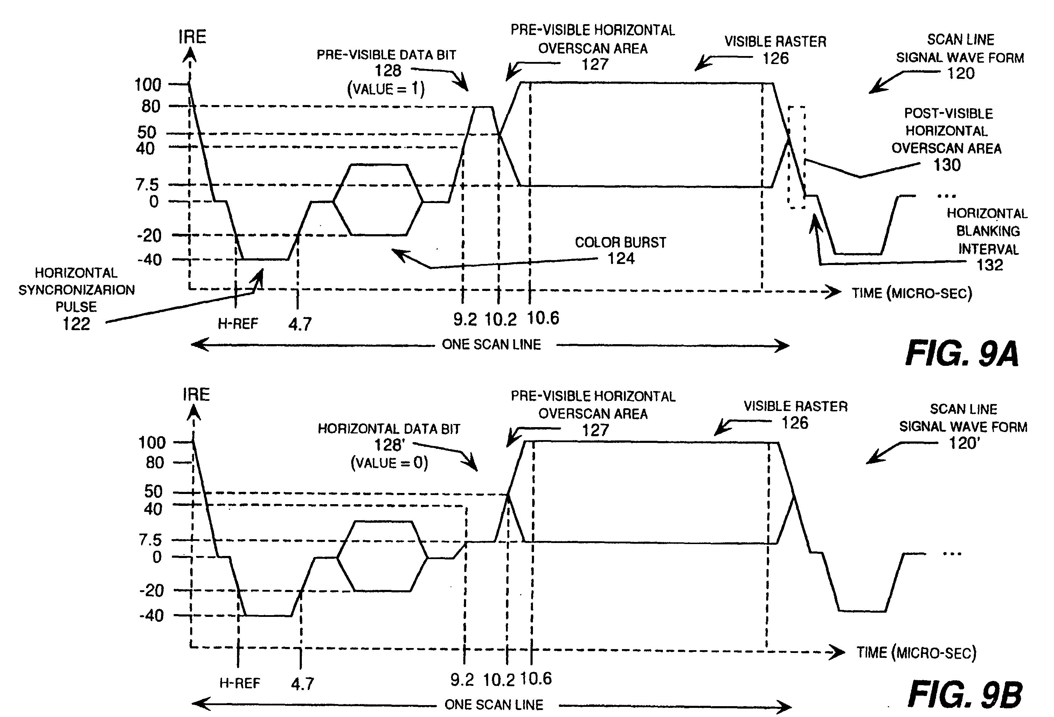

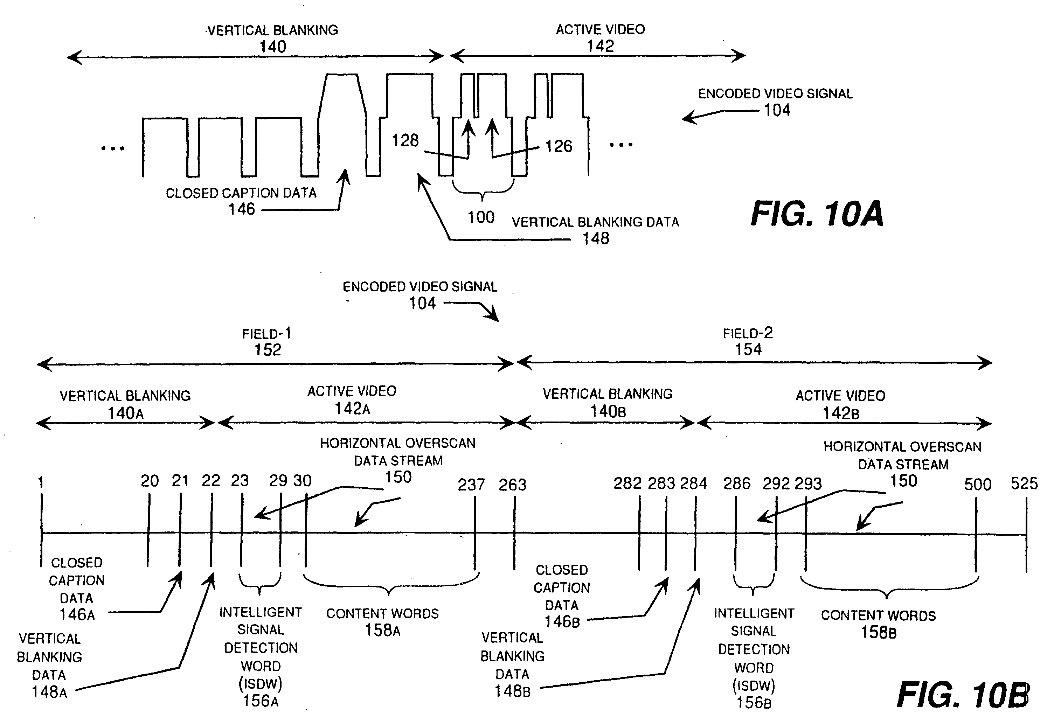

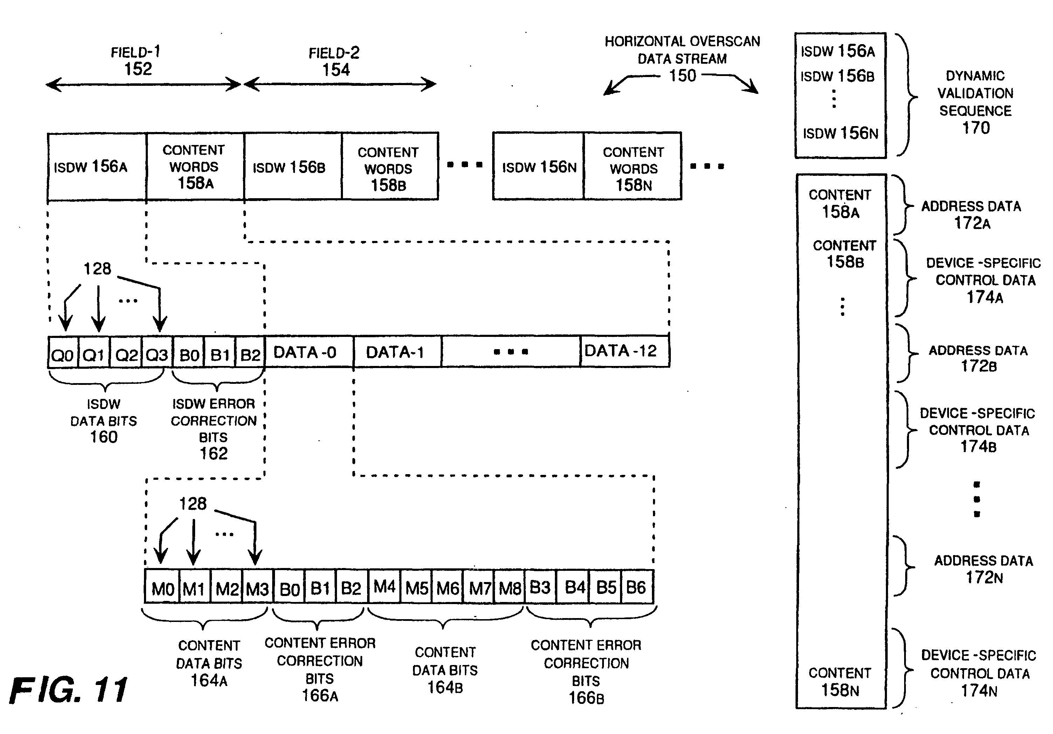

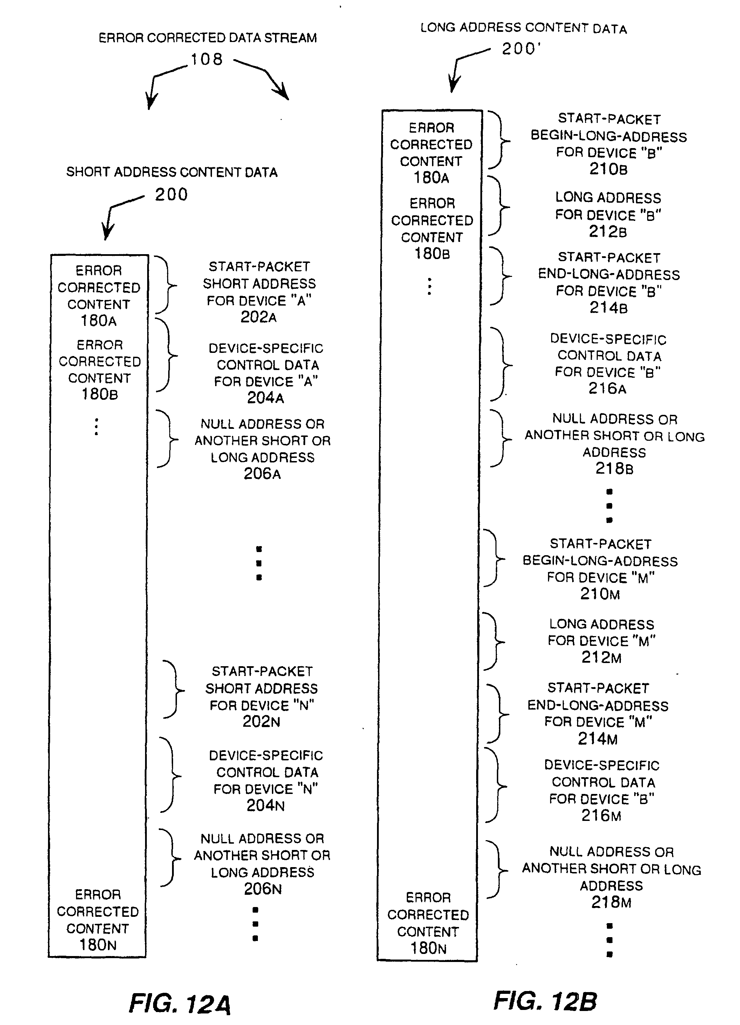

The video data encoder **76** concatenates encoded data with the lines of the video signal **102** to create an encoded video signal **104,** as described in detail with respect to FIGS. **9A-B** and **10A-B.** A protocol is defined for the encoded data that is addressable, forwardly compatible, error tolerant, and feasible to deploy in connection with a system that is primarily intended to be a children's entertainment product. This protocol is described in detail with respect to FIGS. **11** and **12A-B.**

The video data encoder **76** transmits the encoded video signal **104** to a video data detector **91,** which may be a remote device that receives the encoded video signal **104** by way of a broadcast-level transmission. Alternatively, video data detector **91** may be a local device, for example in an intercom application. The encoded data does not interfere with the transmission of the underlying video signal **102**. Thus, the encoded video signal **104** may be transmitted using any type of video transmission media, such as a broadcast-level cable television signal, a video tape player, the Internet transmitting a video signal, a computer generating a video signal, and so forth. In addition, because the encoded data is located in the pre-visible or post-visible portions of the video signal **102,** the encoded data does not visibly interfere with the operation of typical televisions or monitors. Therefore, the encoded video signal **104** may be passed directly from the video data detector **91** to the display device **57**, which displays the underlying video signal **102** undisturbed by the encoded data.

The video data detector **91** detects the presence of the encoded data in the encoded video signal **104** by detecting the presence of an intelligent signal detection word (ISDW), as described with reference to FIGS. **10A-B** and **11.** Preferably, a single ISDW is transmitted in the same location of each field of the encoded video signal **104,** such as lines 23 - 29 in field-1 and 286 - 292 in field-2, of a standard interlaced 525-line NTSC television signal. A consecutive series of the ISDWs defines a dynamic validation sequence in which each ISDW varies in at least two bits from the immediately preceding signal detection word. For example, the dynamic validation sequence may be the binary representation of 8, 1, 10, 3, 12, 5, 14, 7.

The video data detector **91** reads the data, if any, in the specified lines, corrects the data for correctable errors that may have occurred in the ISDW bits, and detects the presence of the ISDW. In each frame, the ISDW is typically followed by a number of content words. If the video data detector **91** detects the presence of the ISDW in the encoded video signal **104**, it extracts the content words from the encoded video signal and assembles the content words into a serial data communication signal **106**. The video data detector **91** then transmits the serial data communication signal **106** to a data error processor **99.**

The data error processor **99** strips out the error correction bits, corrects any correctable errors in the content bits, and assembles the corrected content words into a 9-bit error corrected data stream **108**. This 9-bit error corrected data stream **108** is transmitted to a protocol handler **93,** which includes a number of data handlers **89a-n** that detect and route device-specific control data to their associated data sinks **97a-n.** The addressing protocol for the content data is described with reference to FIGS. **12A-B.** Each data handler **89a-n** detects address data, including a short or long address assigned to its associated data sink **97a-n,** and responds by routing the following device-specific control data **110a-n** to its associated data sink **97a-n.** Each data handler **89a-n** may also reformat the device-specific control data into appropriately-formatted data streams for its associated data sink **97a-n.**

In particular, one of the data sinks **97a** reformats the device-specific control data into MIDI format for transmission to a wireless controlled device **60** by way of a DDM encoder **94,** a modulator **95,** and a transmitter **96,** as described previously.

FIGS. 9A and 9B show the location of the encoded data in the context of a single scan line of the encoded video signal **104**. FIG. 9A is a wave form diagram illustrating a data bit value "one" **128** encoded in the horizontal overscan portion of a scan line of the encoded video signal **104**. The scan line represents one line of one frame displayed on the display device **57**. The vertical axis represents the magnitude of the signal wave form **120** in units of IRE and the horizontal axis represents time in micro-seconds, as is familiar to those skilled in the art. Although FIGS. 9A-B are not drawn precisely to scale, important reference points are marked in the units of their corresponding axis. The wave form **120** for the scan line begins with a horizontal synchronization pulse **122** down to -40 IRE, which is a timing signal that indicates the beginning of the scan line (i.e., time = 0) when the leading edge of the pulse passes through -20 IRE to establish the horizontal reference point "H-REF." The horizontal synchronization pulse **122** is followed by a sinusoidal color burst **124** (the approximate envelope is shown), which is used as a calibration signal for the display device **57**. The color burst **124** is followed by a wave form representing the visible raster **126** (the approximate envelope is shown), which creates and typically overlaps slightly the visible image on the display device **57.**

The wave form **120** includes a pre-visible horizontal overscan area **127**, approximately from 9.2 micro-seconds to 10.2 micro-seconds after H-REF, that occurs after the color burst **124** and before the visible raster **126**. The video data encoder **76** locates a pre-visible (i.e., before the visible raster **126**) data bit "one" **128** by driving the wave form **120** to a predetermined high value, such as 80 IRE, in the interval from 9.2 micro-seconds to 10.2 micro-seconds after H-REF. Because the pulse denoting the data bit "one" **128** occurs after the calibration interval of the color burst **124** and before the visible raster **126**, it does not interfere with the operation of the display device **57** or appear on the image displayed.

FIG. 9B is a wave form diagram illustrating a data bit value "zero" **128'** encoded in the horizontal overscan portion of a scan line of the encoded video signal **104.** The video data encoder **76** locates the pre-visible data bit "zero" **128'** by driving the wave form **120** to a predetermined low value, such as 7.5 IRE, in the interval from 9.2 micro-seconds to 10.2 micro-seconds after H-REF.

As noted above, each 16-bit content word includes nine data bits, and each frame includes 13 content words. Thus, encoding one bit per scan line produces a bandwidth for the data encoded in a typical 59.94 Hertz NTSC video signal of 7,013 Baud. This bandwidth is sufficient to provide the data sink **97a** with sufficient data to control several wireless controlled devices **60** in the manner described above.

The 7,013 Baud one-bit-per-scan-line bandwidth of the encoded data is also sufficient to control several other data sink **97b-n** to provide additional services, such as advertising, subscription, and emergency warning information for transmission to the display device **57** and other data sinks. For example, these services might include e-mail, foreign language subtitling, intercom capability, telephone pages, weather warnings, configuration data for a set-top box, and so forth. At present, the 7,013 Baud one-bit-per-scan-line bandwidth is preferred because it provides sufficient bandwidth for the "REALMATION" system and minimizes the cost of the system components, in particular the video data encoder **76** and the video data detector **91**. The bandwidth may be increased, however, by locating a second pulse in the post-visual horizontal overscan area **130,** which occurs after the visible raster **126** and before the horizontal blanking interval **132** (during which the electron gun in the CRT of the display device **57** sweeps back from the end of the just completed scan line to the beginning of the next scan line).

And the bandwidth may be further increased by enabling each pulse **128, 130** to represent more that just two (1,0) states. For example, for 3 states (c.f., the 1.0, 1.5, 2.0 DDM pulse widths), an analog of the "REALMATION" DDM protocol could be used. For 4 states, the pulse could represent 2 bits (e.g., 100-80 IRE = 1,1; 70-50 IRE = 1,0; 40-20 IRE = 0,0; 10 to -40 IRE = 0,1). For 8 states, the pulse could represent 3 bits; for 16 states, the pulse could represent 4 bits, and so forth. For example, if the system **100** were to employ data pulses in both the pre-visual horizontal overscan area **127** and the post-visual horizontal overscan area **130**, each data pulse having 16 states, each scan line would be able to transmit eight bits. This would increase the bandwidth from 7,013 Baud to 56,104 Baud, which might be worth the increased cost for the video data encoder **76** and the video data detector **91** for future applications.

FIGS. 10A and 10B show the location of encoded data in the context of a standard NTSC video frame. FIG. 10A is a diagram illustrating the location of data bits in a portion of a standard 525-line two-field interlaced NTSC video signal. Each frame of the video data includes a vertical blanking interval **140** (during which the electron gun in the CRT of the display device 57 sweeps back and up from the end of the just completed frame to the beginning of the next frame) followed by an active video interval **142,** which includes a number of left-to-right scan lines that sequentially paint the display device **57** from the top to the bottom of the screen. At the end of the vertical blanking interval **140,** the last two pulses are typically reserved for closed caption data **146** and vertical blanking data **148,** which may be already dedicated to other purposes. In addition, the bottom of each field is typically corrupted by head switching noise present in the output of helical-scan video tape players of consumer formats such as VHS and 8mm. Therefore, the horizontal overscan portion of individual scan lines provides the preferred location for encoded data bits **128**, **128'** of the encoded video signal **104**.

FIG. 10B is a diagram illustrating the location of data bits in the two interlaced fields of the standard NTSC video frame. That is, FIG. 10B shows the location of the encoded data in the context of a complete NTSC 525-line two-field interlaced video frame. The frame of video data includes lines 1-262 in field-1 **152** interlaced with lines 263-525 in field-2 **154.** Field-1 **152** includes a vertical blanking interval **140a** and an active video interval **142a.** The vertical blanking interval **140a** includes lines 1-22 and concludes with line 21, which may include closed caption data **146a,** and line 22, which may include vertical blanking data **148a**. An ISDW **156a** is encoded in lines 23-29 and content data **158a** is encoded in lines 30-237. Field-2 **154** includes a vertical blanking interval **140b** and a active video interval **142b.** The vertical blanking interval **140b** includes lines 263-284 and concludes with line 283, which may include closed caption data **146b,** and line 284, which may include vertical blanking data **148b.** An ISDW **156b** is encoded in lines 286-292 and content data **158b** is encoded in lines 293-500.

Each ISDW preferably includes a plurality of data bits and a plurality of error correction bits defining a correction sequence that allows a single-bit error in the data bits to be detected and corrected. For example, the ISDW may include a seven-bit Hamming code (i.e., four data bits and three error correction bits) in the format shown below in Table 1.

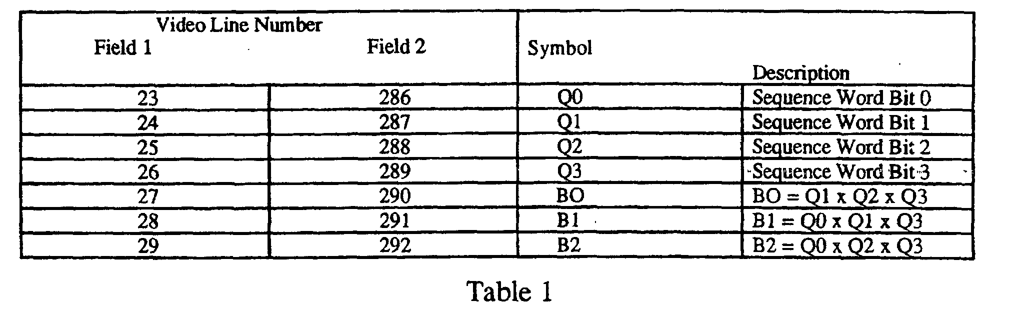

In each field **152, 154** of a video frame, up to 13 16-bit content words **158** may follow the ISDW **156,** as shown below in Table 2.

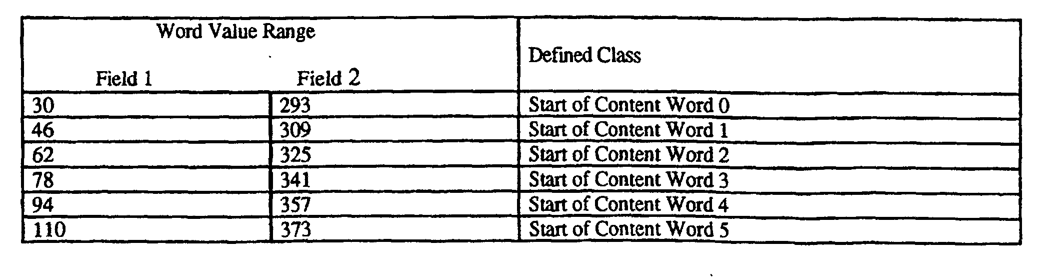

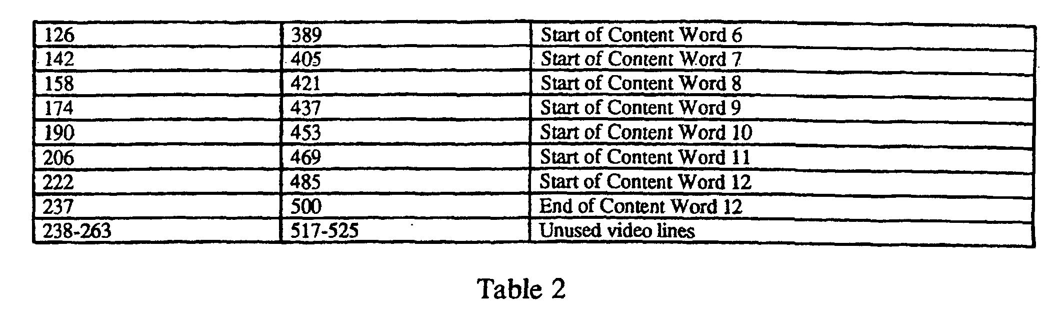

Each content word preferably includes a plurality of data bits **164** and a plurality of error correction bits **166** defining a correction sequence that allows a single-bit error in the data bits to be detected and corrected. For example, the content word may include a seven-bit Hamming code (i.e., four data bits and three error correction bits) and a nine-bit Hamming code (i.e., five data bits and four error correction bits) in the format shown below in Table 3.

**Table 3**

| Offset from first line | Symbol | Description |
|---|---|---|
| +0 | M0 | Data Bit 0 |
| +1 | M1 | Data Bit 1 |
| +2 | M2 | Data Bit 2 |
| +3 | M3 | Data Bit 3 |
| +4 | B0 | B0 = M1 x M2 x M3 |
| +5 | B1 | B1 = M1 x M1 x M3 |
| +6 | B2 | B2 = M1 x M2 x M3 |
| +7 | M4 | Data Bit 4 |
| +8 | M5 | Data Bit 5 |
| +9 | M6 | Data Bit 6 |
| +10 | M7 | Data Bit 7 |
| +11 | M8 | Data Bit 8 |
| +12 | B3 | B3 = M4 x M5 x M6 x M7 |
| +13 | B4 | B4 = M4 x M5 x M7 x M8 |
| +14 | B5 | B5 = M4 x M6 x M7 x M8 |
| +15 | B6 | B6 = M5 x M6 x M7 x M8 |

Although many other, often more sophisticated, data correction techniques may be used, Hamming codes are preferred because of their simplicity and small computation requirement.

FIG. 11 is a message protocol diagram illustrating the format of the horizontal overscan data stream **150** of the encoded video signal **104**. The horizontal overscan data stream **150** is typically created by the video data detector **91,** which extracts the data from the encoded video signal **104** and assembles the extracted data into the serial data communication signal **106.** Each field of the horizontal overscan data stream **150** includes intelligent signal detection data, typically a single 7-bit ISDW, and content data, typically 13 16-bit content words. The representative ISDW **156a** includes four data bits **160** and three error correction bits **162**, as shown Table 1, above. The representative content word **158a** includes four data bits **164a,** followed by three error correction bits **166a**, followed by five data bits **164b**, followed by four error correction bits **166b,** as shown Tables 2 and 3, above.

A consecutive series of the ISDWs **155a-n** defines a dynamic validation sequence **170** in which each ISDW varies in at least two bits from the immediately preceding signal detection word. For example, the dynamic validation sequence may be the binary representation of 8, 1, 10, 3, 12, 5, 14, 7. Causing the dynamic validation sequence **170** to vary in at least two bits in each successive ISDW reduced the chance that random noise may be misinterpreted as ISDW data.

The content data includes address data **172** and device-specific control data **174.** Thus, the protocol for the content data is addressable so that device-specific control data may be directed to a number of different data sinks **97a-n.** The addressable nature of the content data is represented by the address data **172a-n** and the device-specific control data **174a-n.** To limit the bandwidth requirement of the address data **172,** a limited number of predefined short addresses are preferably reserved for assignment to data sinks. To further extend the addressability of the protocol, two short addresses are reserved for denoting the beginning and end of long addresses. This allows a virtually unlimited number of variable length long addresses to be assigned in the future.

The first data bit of each short address differentiates between address words and device-specific control words (0 = address; 1 = device-specific control data). For an address word, the eight bits that follow the address identification bit allow up to 256 addresses. The first 254 addresses are short address classes that may be preassigned to specific classes of controlled devices. The last two addresses (0FE and OFF) are used as start and stop delimiters for a long address. Thus, a virtually infinite number of additional class addresses of variable length may be assigned in the future using the long address delimiters. This provides the protocol with a very high degree of forward extensibility. The addressing protocol is shown below in Table 4.

**Table 4**

| Word Value Range | | |
|---|---|---|
| (Binary) | (HEX) | Defined Class |
| 0 0000 0000 | 000 | The NULL Address |
| 0 xxxx xxxx | 001-0FD | Short Address Class |
| 0 1111 1110 | OFE | Begin Long Address Block |
| 0 1111 1111 | OFF | End Long Address Block |

FIG. 12A is a message protocol diagram illustrating the format of short address content data in the encoded video signal **104.** The content data preferably includes the error corrected content data bits assembled into a 9-bit data steam by the data error processor **99.** To address a data packet to a particular short-address data sink **97a**, that data sink's short address is transmitted in the encoded video signal **104.** The first occurrence of the data sink's short address is interpreted as a start-packet message **202a** by the data handler **89a**, which responds by beginning the routing of subsequently-received device-specific control data to the data sink **97a**. The start-packet message **202a,** therefore, is followed by device-specific control data **204a** for the selected data sink **97a.**

The packet for the data sink **97a** is ended by transmitting either the NULL address or another long or short address in the encoded video signal **104.** The new short address is interpreted as an end-packet message **206a** by the data handler **89a,** which responds by discontinuing the routing of subsequently-received device-specific control data to the data sink **97a.** This addressing procedure may be repeated, as desired, for each data sink that is assigned a short address.

As noted above, to further extend the addressability of the protocol, two short addresses are reserved for denoting the beginning and end of long addresses. FIG. 12B is a message protocol diagram illustrating the format of long address content data in the encoded video signal **104.** To address a data packet to a particular long-address data sink **97b,** the short address dedicated to denoting a begin-long-address message **210b** (0FE) is transmitted in the encoded video signal **104.** The desired data sink's long address **212b** is then transmitted, followed by the short address dedicated to denoting an end-long-address message **214b** (OFF). The first occurrence of the data sink's long address is interpreted as a start-packet message by the data handler **89b**, which responds by beginning the routing of subsequently-received device-specific control data to the data sink **97b**. The start-packet message **202a,** therefore, is followed by device-specific control data **204a** for the data sink **97a**.

The packet for the data sink **97b** is ended by transmitting a further address word in the encoded video signal **104**. The new address is interpreted as an end-packet message by the data handler **89b**, which responds by discontinuing the routing of subsequently-received device-specific control data to the data sink **97b**. This addressing procedure may be repeated, as desired, for each data sink that is assigned a long address.

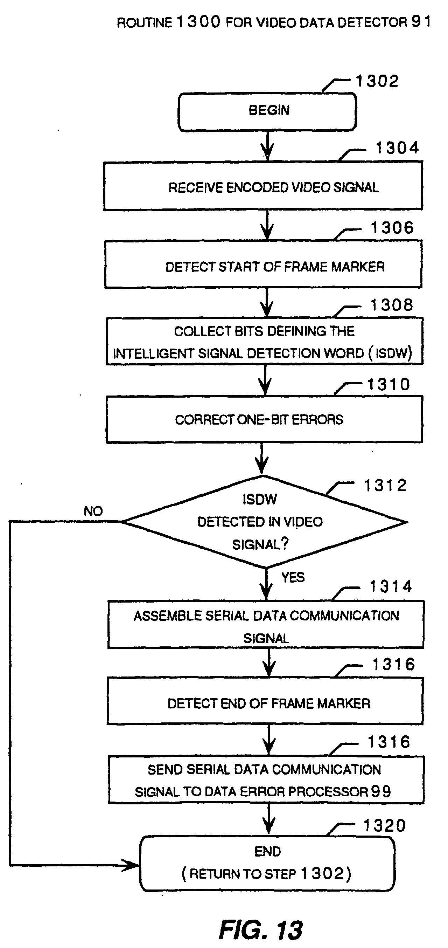

FIG. 13 is a logic flow diagram illustrating routine **1300** for the video data detector **91.** Routine **1300** begins in step **1302**, and in step **1304** the video data detector **91** receives the encoded video signal **104** from the video data encoder **76**. In step **1306**, the video data detector **91** detects a start of frame marker. In step **1308**, the video data detector **91** collects the bits in the ISDW region of the frame, and in step **1310** the video data detector **91** corrects any correctable, typically one-bit, errors in the data. In step **1312,** the video data detector **91** determines whether the data collected from the ISDW region of the frame is, in fact, an ISDW.

Specifically, the video data detector **91** determines whether a consecutive series of the ISDWs correspond to the dynamic validation sequence **170,** in which each ISDW typically varies in at least two bits from the immediately preceding signal detection word. For example, the dynamic validation sequence may be the binary representation of 8, 1, 10, 3, 12, 5, 14, 7. If the dynamic validation sequence **170** is detected, the "YES" branch is followed from step **1312** to step **1314,** in which the video data detector **91** assembles the content words **158** into the serial data communication signal **106.** In step **1316,** the video data detector **91** detects an end of frame marker, and in step **1318** the video data detector **91** transmits the serial data communication signal **106** for the frame to the data error processor **99.** Step **1318** and the "NO" branch from step **1312** are followed by the "END" step **1320,** which returns step **1302** so that routine **1300** may repeat for the next frame of data.

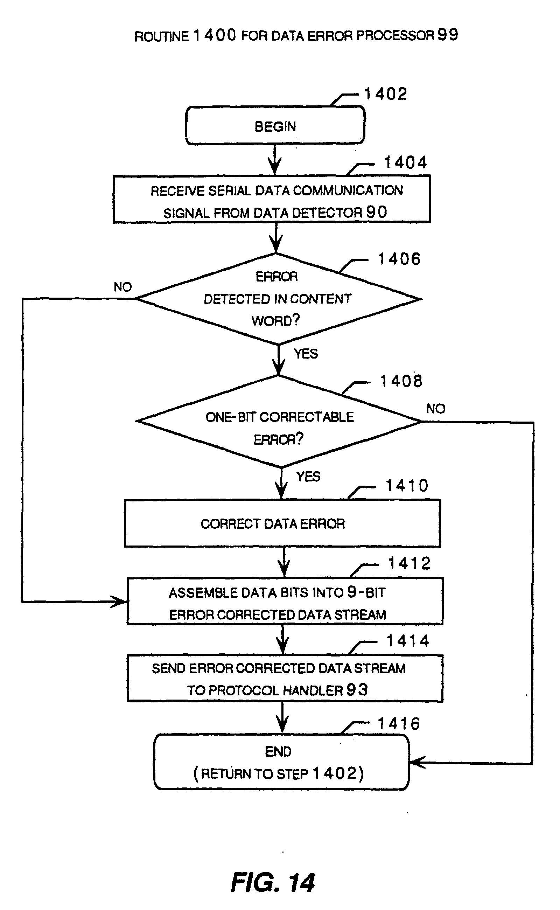

FIG. 14 is a logic flow diagram illustrating routine **1400** for the data error processor **99.** Routine **1400** begins in step **1402,** and in step **1404** the data error processor **99** receives the serial data communication signal **106** from the video data detector **91**. In step **1406**, the data error processor **99** determines whether a data error is detected in the content data bits **164** of the serial data communication signal **106.** If a data error is not detected in the content data bits **164** of the serial data communication signal **106,** the "NO" branch is followed to step **1412,** which is described below. If a data error is detected in the content data bits **164** of the serial data communication signal **106,** the "YES" branch is followed to step **1408,** in which the data error processor **99** determines whether the error is a correctable, typically one-bit, data error.

If the error is a correctable data error, the "YES" branch is followed from step **1408** to step **1410**, in which the data error processor **99** corrects the error. In step **1412,** the data error processor **99** assembles the content data bits **164** into a 9-bit error corrected data stream **108**. And in step **1414**, the data error processor **99** transmits the 9-bit error corrected data stream **108** to the protocol handler **93**. Step **1414** and the "NO" branch from step **1408** are followed by the "END" step **1416**, which returns step **1402** so that routine **1400** may repeat for the next serial data communication received from the video data detector **91.**

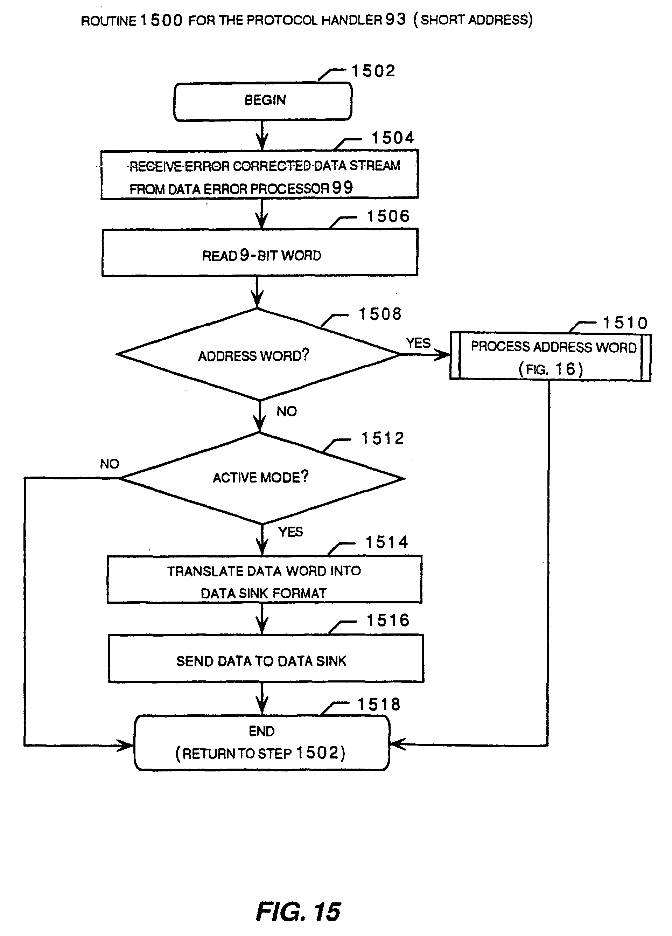

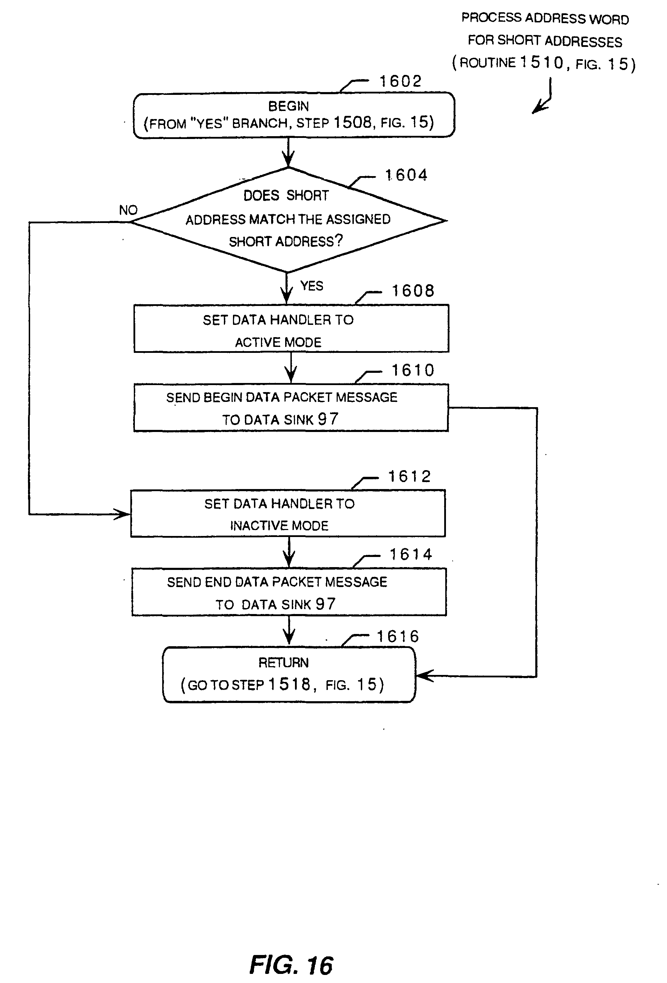

FIG. 15 is a logic flow diagram illustrating routine **1500** for a data handler **89** of the protocol handler **93** that is configured to respond to short addresses. Routine **1500** begins in step **1502,** and in step **1504** the data handler **89** receives the 9-bit error corrected data stream **108** from the data error processor **99.** In step **1506,** the data handler **89** reads a 9-bit content word. In step **1508**, the data handler **89** determines whether the content word is an address word, preferably by checking to see whether the last data bit is a zero. If the content word is an address word, the "YES" branch is followed to routine **1510**, in which the data handler **89** process the address word. Routine **1510** is described below with reference to FIG. 16.

If the content word is not an address word (i.e., the content word is device-specific control data), the "NO" branch is followed from step **1508** to step **1512,** in which the data handler **89** determines whether it is in its active mode. That is, the data handler **89** determines whether it has previously been toggled to the active mode by receiving the short address for its associated data sink **97**. If the data handler **89** is in its active mode, the "YES" branch is followed from step **1512** to step **1514**, in which the data handler **89** translates the device-specific control data into the appropriate format for its associated data sink **97**. In step **1516**, the data handler **89** transmits the data sink format data **110** to its associated data sink **97**. Step **1516**, as well as routine **1510** and the "NO" branch from step **1512**, are followed by the "END" step **1518,** which returns step **1502** so that routine **1500** may repeat for the next 9-bit content word.

FIG. 16 is a logic flow diagram illustrating routine 1510 for processing short address words. Routine **1510** begins in step **1602** following the "YES" branch from step **1508,** which is shown in FIG. 15. In step **1604,** the data handler **89** determines whether the received address is the short address that matches the short address assigned to its associated data sink **97.** If the received address matches the short address assigned to its associated data sink **97**, the "YES" branch is followed to step **1608**, in which the data handler **89** is set to the active mode. Because device-specific control data for the data sink **97** will follow immediately, the data handler **89** typically sends a "begin data packet" message to its associated data sink **97** in step **1610**. Step **1610** is followed by the "RETURN" step **1616,** which returns to step **1518,** shown on FIG. 15.

Referring again to step 1604, if the received address does not match the assigned short address, the "NO" branch is followed to step **1612**, in which the data handler **89** is set to the inactive mode. Because this signals the end of a data packet, which means that device-specific control data for the data sink **97** will not follow immediately, the data handler **89** typically sends an "end data packet" message to its associated data sink **97** in step **1614.** Step **1614** is followed by the "RETURN" step **1616,** which returns to step **1518,** shown on FIG. 15.

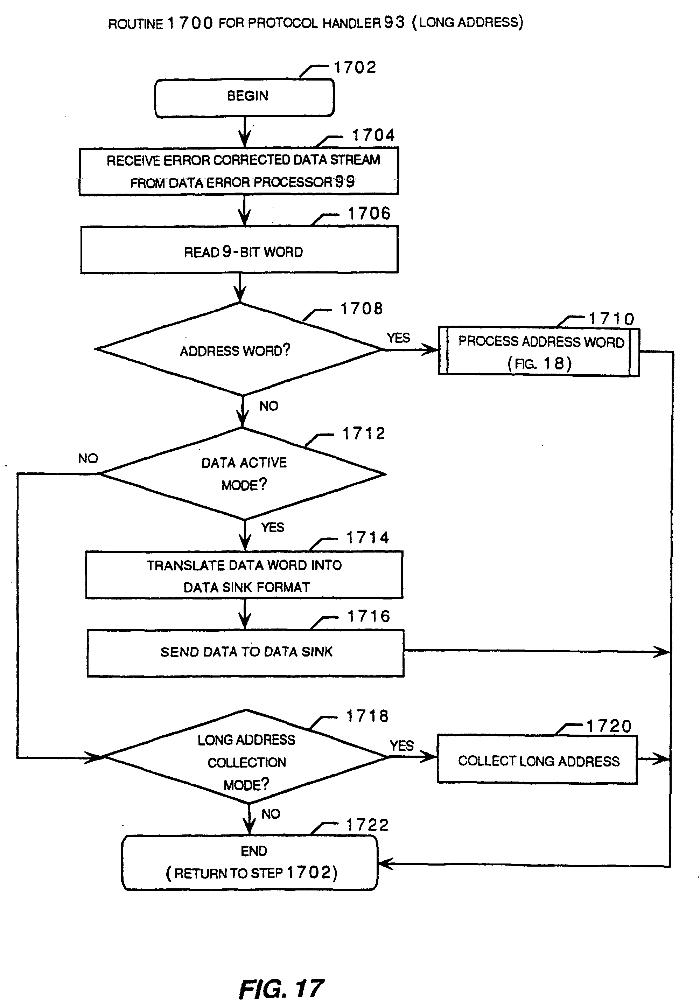

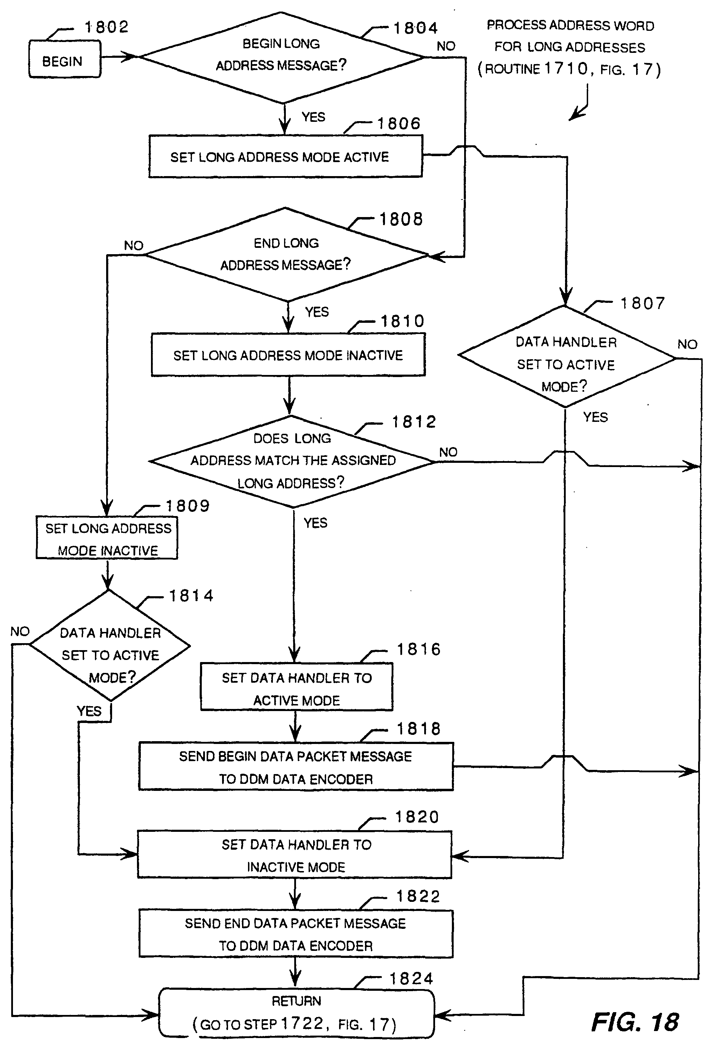

FIG. 17 is a logic flow diagram illustrating routine **1700** for a data handler **89** of the protocol handler **93** that is configured to respond to long addresses. Routine **1700** begins in step **1702,** and in step **1704** the data handler **89** receives the 9-bit error corrected data stream **108** from the data error processor **99**. In step **1706,** the data handler **89** reads a 9-bit content word. In step **1708**, the data handler **89** determines whether the content word is an address word, preferably by checking to see whether the last data bit is a zero. If the content word is an address word, the "YES" branch is followed to routine **1710**, in which the data handler **89** process the address word. Routine **1710** is described below with reference to FIG. 18.

If the content word is an address word (i.e., the content word is device-specific control data), the "NO" branch is followed from step **1708** to step **1712,** in which the data handler **89** determines whether it is in its data active mode. That is, the data handler **89** determines whether it has previously been toggled to its data active mode by receiving the long address for its associated data sink **97.** If the data handler **89** is in its data active mode, the "YES" branch is followed from step **1712** to step **1714,** in which the data handler **89** translates the device-specific control data into the appropriate format for its associated data sink **97**. In step **1716,** the data handler **89** transmits the data sink format data **110** to its associated data sink **97.** Step **1716** is followed by the "END" step **1722**, which returns step **1702** so that routine **1700** may repeat for the next 9-bit content word.

If the data handler **89** is not in its data active mode, the "YES" branch is followed from step **1712** to step **1718,** in which the data handler **89** determines whether it is in its long address collection mode. If the data handler **89** is in its long address collection mode, the "YES" branch is followed to step **1720,** in which the data handler **89** collects the data bits of the current content word as part of a long address. If the data handler **89** is not in its long address collection mode, the "NO" branch is followed to the "END" step **1722**, which returns step **1702** so that routine **1700** may repeat for the next 9-bit content word.

FIG. 18 is a logic flow diagram illustrating routine **1710** for processing long address words. Routine **1710** begins in step **1702** following the "YES" branch from step **1708,** which is shown in FIG. 17. In step **1804,** the data handler **89** determines whether the received content word is a begin long address message, preferably by determining whether the received content word is the short address (0FE) dedicated to this type of message. If the received content word is a begin long address message, the "YES" branch is followed to step **1806,** in which the data handler **89** is set to the long address collection mode.

Step **1806** is followed by step **1807,** in which the data handler **89** determines whether it is already in the data active mode. If the data handler **89** is already in the data active mode, the "YES" branch is followed to **1820**, in which the data handler is set to the data inactive mode. Because this signals the end of a data packet, which means that device-specific control data for the data sink **97** will not follow immediately, the data handler **89** typically sends an "end data packet" message to its associated data sink **97** in step **1822**. Step **1822** is followed by the "RETURN" step **1824,** which returns to step 1722, shown in FIG. 17.

Referring again to step **1804,** if the received content word is not a begin long address message, the "NO" branch is followed to step **1808,** in which the data handler 89 determines whether the received content word is an end long address message, preferably by determining whether the received content word is the short address (OFF) dedicated to this type of message. If the received content word is not an end long address message, the "NO" branch is followed to step **1809**, in which the data collection mode for the data handler **89** is inactivated. Step **1809** is followed by step **1814,** in which the data handler **89** determines whether it is set to the data active mode. If the data handler **89** is set to the data active mode, the "YES" branch is followed to step **1820**, in which the data handler is set to the data inactive mode. Because this signals the end of a data packet, which means that device-specific control data for the data sink **97** will not follow immediately, the data handler **89** typically sends an "end data packet" message to its associated data sink **97** in step **1822.** Step **1822** is followed by the "RETURN" step **1824,** which returns to step **1722,** shown on FIG. 17.

Referring again to step **1808**, if the received content word is an end long address message, the "YES" branch is followed to step **1810,** in which the long address collection mode for data handler **89** is inactivated. In step **1812,** the data handler **89** determines whether the received long address (i.e., the long address collected in step **1720,** which is shown in FIG. 17) matches the long address assigned to its associated data sink **97**. If the received long address matches the long address assigned to its associated data sink **97,** the "YES" branch is followed to step **1816**, in which data handler **89** is set to the data active mode. Because device-specific control data for the data sink **97** will follow immediately, the data handler **89** typically sends a "begin data packet" message to its associated data sink **97** in step **1818**. Step **1818** is followed by the "RETURN" step **1824,** which returns to step **1722,** shown on FIG. 17.

Those skilled in the art will understand that the specific protocol illustrated in Tables 1-4 are just one example of many specific protocols that could be used to implement an addressing scheme using short addresses and long address in accordance with the present invention. In addition, the location of the data within the encoded video signal **104** may be varied somewhat without unduly affecting the performance of the system **100**. In particular, Microsoft Corporation has been granted permission by the Federal Communications Commission to encode digital data in lines 23-257 in field-1 and lines 285-519 in field-2 of a standard 525 line NTSC television broadcast signal. As shown in FIG. 10B and Tables 1-4 above, the preferred protocol only utilizes lines 23-237 in field-1 and lines 286-500 in field-2. This enhances compatibility of the encoded video signal **104** with MPEG-based video compression algorithms, which typically exclude line 285 and include a compressed representation of only 480 visible scan lines.

The invention thus provides a method and system for encoding control data for wireless controlled devices in connection with a video signal so that the actions of the controlled devices operate in synchronism with the programming information defined by the video signal. Additional data may be transmitted encoded into the video signal for providing additional services, such as e-mail, foreign language subtitling, intercom capability, telephone pages, weather warnings, configuration data for a set-top box, and so forth. The protocol for the encoded data is addressable, forwardly compatible, error tolerant, and feasible to deploy in connection with a system that is primarily intended to be a children's entertainment product.

It should be understood that the foregoing relates only to specific embodiments of the invention, and that numerous changes may be made therein without departing from the scope of the invention as defined by the following claims.

## Claims

1. A method for encoding control data (110) in a video signal (102) defining a plurality of frames (152, 154), each frame comprising a plurality of lines, comprising the steps of concatenating encoded data with the lines of the video signal to create an encoded video signal (104), and configuring the encoded data to define content data in association with each frame, **characterised by**:
defining the content data to include,
a first address (172a) associated with a first device (97a)
device-specific control (174a) data for the first device
a second address (172b) associated with a second device (97b), and
device-specific control data (174b) for the second device and
encoding the content data in a horizontal overscan portion (127, 130) of the video signal (102).

2. The method of Claim 1, further comprising the steps of
in response to the first address, routing the device-specific control data for the first device to the first device (97a);
controlling actions of the first device in accordance with the device-specific control data for the first device;
in response to the second address, routing the device-specific control data for the second device to the second device (97b); and
controlling actions of the second device in accordance with the device specific control data for the second device.

3. The method of any of Claims 1-2, wherein:
the video signal defines programming information comprising a scene displayed on a display device (57), and
the device-specific control data for the first device includes voice data and motor control data that causes the first device to behave as a character in the scene displayed on the display device.

4. The method of any of Claims 1-3, wherein the device specific control data (174b) for the second device (97b) is selected from the following
voice data that causes the second device to behave as a second character in the scene displayed on the display device:
motor control data that causes the second device to behave as a second character in the scene displayed on the display device.
electronic mail for transmission to a computer system;
intercom information for transmission to an intercom system.
telephone paging information for transmission to a paging system,
language translation data displayed on the display device
advertising information displayed on the display device;
subscription information displayed on the display device, and
emergency warning information displayed on the display device

5. The method of any of Claims 1 4, wherein the first address (172a) comprises a first start-packet short address word (202a) and the second address (172b) comprises a second start-packet short address word (202b) further comprising the step of:
interpreting the second start packet short address word (202b) as a first end-packet short address word for with the first device.

6. The method of any of Claims 1-5, wherein the first address comprises a start-packet begin-long-address word (210), further comprising the step of configuring the content data to define:
a first occurrence of a long address (212) associated with the first device
a start-packet end-long-address word (214) associated with the first device; and
device-specific control data (216) for the first device

7. The method of any of Claims 1-6, further comprising the step of configuring the encoded data to define signal detection data (156) each signal detection word compnsing.
a plurality of data bits (160), and
a plurality of error correction bits (162) defining a correction sequence that allows a single-bit error in the data bits to be detected and corrected.

8. The method of any of Claims 1-7, wherein:
the video signal comprises a plurality of two-field interlaced frames (152, 154); and
the encoded data of each field of the video signal defines a signal detection word (156) consisting essentially of four data bits (160) and three error correction bits (162).

9. The method of any of Claims 1-8, wherein the content data comprises a plurality of content words ( 158). each content word comprising.
a plurality of data bits (164); and
a plurality of error correction hits (166) defining a correction sequence that allows errors in the data bits to be detected and corrected

10. The method of Claim 9, wherein each content word (158) consists essentially of nine data bits (164) and seven error correction bits (166)

11. The method of any of Claims 1-10, further comprising the step of configuring the encoded data to define signal detection data comprising a signal detection word (156) encoded into each of a plurality of the frames 152 154) of the video signal; and
a consecutive series of the signal detection words defines a dynamic validation sequence in which each signal detection word varies in at least two bits from the immediately preceding signal detection word.

12. The method of Claim 10, wherein the dynamic validation sequence comprises the binary representation of 8, 1, 10, 3 12, 5, 14, 7.

13. The method of any of Claims 1-12, wherein:
the encoded data comprises a plurality of line signals; and
each line signal comprises one or more data bits encoded in the horizontal overscan portion (127, 130) of each line of the video signal.

14. The method of Claim 12, wherein each line of the video signal comprises a color burst portion (124) and a visible raster portion 126), and wherein each line signal comprises a pulse (127) located between the color burst portion and the visible raster portion.

15. The method of Claim 14, wherein each pulse defines a single bit of the encoded data.

16. The method of any of Claims 1-15, wherein.
the video signal comprises a plurality of two-field interlaced flames 152, 154); and
the encoded data of each field of the video signal defines a 7 bit signal detection word (156) and 13 16-bit content words (158)

17. The method of Claim 14 wherein each pulse (127, 130) is modulated to define a plurality of bits of the encoded data.

18. The method of any of Claims 1-17. wherein each line of the video signal comprises a color burst portion (124), a visible raster portion (126), and a horizontal blanking interval (132), and wherein each line signal comprises
a pre-visible pulse (127) located between the color burst portion and the visible raster portion; and
a post-visible pulse (130) located after the visible raster portion and before the horizontal blanking interval.

19. The method of Claim 18, wherein:
each pre-visible pulse (127) defines a single bit of the encoded data, and
each post-visible pulse (130) defines a single bit of the encoded data.

20. The method of Claim 19, wherein.
each pre-visible pulse (127) is modulated to define a plurality of bits of the encoded data; and
each post-visible pulse (130) is modulated to define a plurality of bits of the encoded data.

21. An encoded video signal (104) comprising:
a video signal (102) defining a plurality of frames (152, 154), each frame comprising a plurality of lines containing encoded data (110) concatenated with the lines of the video signal, **characterised by**
the encoded data (110) being located within a horizontal overscan portion (127, 130) of the video signal (102);
the encoded data defining signal detection data (156) and content data (158) in association with each frame:
the signal detection data defining a signal detection word encoded into each frame such that a consecutive series of rhe signal detection words defines a dynamic validation sequence in which each signal detection word varies in at least two bits from the immediately preceding signal detection word, and
the content data defining,
a first start-packet short address word ( 172a) associated with a first device (97a),
device-specific control data (174a) for the first device (97a)
a second start-packet short address word (172b) associated with a second device (97b), and
device-specific control data (174b) for the second device (97b)

22. The encoded video signal of Claim 21 wherein the content data further defines:
a start-packet begin-long address word (210) associated with a third device (97c);
a first occurrence of a long address (212) associated with the third device;
a start-packet end-long-address word (214) associated with the third device; and
device-specific control data (216) for the third device.

23. The encoded video signal of any of Claims 21-22, wherein:
the video signal defines programming information; and
the device-specific control data for the first device causes first device to behave as a character in a scene defined by the programming information.

24. The encoded video signal of any of Claims 21-23, wherein the encoded data comprises a plurality of line signals wherein each line signal comprises one or more data bits encoded in the horizontal overscan portion (127, 130) of each line of the video signal.

25. The encoded video signal of any of Claims 21-24, wherein:
the content data comprises a plurality of content words (158);
the signal detection data comprises a plurality of signal detection words (156); and each signal detection word and each content word comprises,
a plurality of data bits (160), and
a plurality of error correction bits (162) defining a correction sequence that allows errors in the data bits to be detected and corrected.

26. The method of Claim 1, wherein:
the first address (172a) associated with the first device (97a) comprises a first start-packet short address word (202a);
the device-specific control (174a) data for the first device (97a) comprise data for causing the first device (97a) to behave as a character in a scene defined by the programming information; and
the second address (172b) associated with the second device (97b) comprises a second start-packet short address word (202b).

27. The method of Claim 26, wherein the content data further defines:
a start-packet begin-long-address word (210) associated with a third device (97c);
a long address (212) associated with the third device (97c);
a start-packet end-long-address word (214) associated with the third device (97c); and
device-specific control data (216) for the third device (97c).

28. The method of any of Claims 26-27, wherein:
the encoded data defines signal detection data comprising a signal detection word (156) encoded into each of a plurality of frames (152, 154) of the video signal (104); and
a consecutive series of the signal detection words defines a dynamic validation sequence in which each signal detection word varies in at least two bits from the immediately preceding signal detection word.

29. The method of any of Claims 26-28, wherein:
the content data comprises a plurality of content words (158) and the signal detection data comprises a plurality of signal detection words (156), each signal detection word and each content word comprising,
a plurality of data bits (160, 164), and
a plurality of error correction bits (162, 166) defining a correction sequence that allows errors in the data bits to be detected and corrected.

30. A system for encoding data (110) in association with a video signal (102), comprising a video data encoder (76) functionally connected to a video source (56) and operative for receiving a video signal (102) from the video source (56), the video signal (102) defining a plurality of frames (152, 154), each frame comprising a plurality of lines, the video data encoder also concatenating the encoded data with the plurality of lines of the video signal to create an encoded video signal (104);
means for creating the encoded video signal (104) by defining at least one content word (158) in association with each of a plurality of the frames, such that encoded data comprise a plurality of line signals wherein each line signal comprises one or more bits encoded in the horizontal overscan portion (127, 130) of each line of the video signal (102); and
the content words defining;
a first start-packet short address word (202a) associated with a first device (97a);
device-specific control data (204a) for the first device (97a);
a second start-packet short address word (202b) associated with a second device (97b); and
device-specific control data (204b) for the second device (97b).

31. The system of Claim 30, wherein
the video signal (104) defines programming information; and
the device-specific control data (202a) for the first device (97a) causes first device to behave as a character in a scene defined by the programming information.

32. The system of any of Claims 30-31, wherein said means further defines a signal detection word (156).

33. The system of any of Claims 30-32, wherein each line of the video signal comprises a color burst portion (124) and a visible raster portion (126), and wherein each line signal comprises a pulse (127) located between the color burst portion and the visible raster portion.

34. The system of Claim 33, wherein each purse defines a single bit of the encoded data.

35. The system of any of Claims 30-34, wherein:
the video signal defines a plurality of two-field interlaced frames (152,154) and
the encoded data of each field of the video signal defines a signal detection word (156) and thirteen content words (158).

36. The system of Claim 33, wherein each pulse (127,130) is modulated to define a plurality of bits of the encoded data.

37. The system of any of Claims 30-36, wherein each line of the video signal comprises a color burst portion (124), a visible raster portion (126), and a horizontal blanking interval (132), and wherein each line signal comprises:
a pre-visible pulse (127) located between the color burst portion and the visible raster portion; and
a post-visible pulse (130) located after the visible raster portion and before the horizontal blanking interval.

38. The system of Claim 37, wherein:
each pre-visible pulse (127) defines a single bit of the encoded data; and
each post-visible pulse (130) defines a single bit of the encoded data.

39. The system of Claim 38, wherein:
each pre-visible pulse (127) is modulated to define a plurality of bits of the encoded data; and
each post-visible pulse (130) is modulated to define a plurality of bits of the encoded data.

40. The system of Claim 32, further comprising a data detector (91) functionally connected to the video data encoder (76) and operative for:
receiving the encoded video signal (104) from the video data encoder;
detecting the presence of the signal detection word (156);
extracting the content words (158) from the encoded video signal; and
assembling the content words (158) into a serial data communication signal (106).

41. The system of Claim 40, further comprising a data error processor (99) functionally connected to the data detector (91) and operative for:
receiving the serial data communication signal (106) from the data decoder (91);
parsing the serial data communication signal (106) into data bits (160, 164) and error corrections bits (162,166);
analyzing the error correction bits (162, 164) to detect errors in the data bits (160, 164);
correcting detected errors in the data bits (160, 164); and
assembling the corrected data bits (160, 164) into an error corrected data stream (108).

42. The system of Claim 41, further comprising a protocol handler (93) functionally connected to the data error processor (99) and operative for:
receiving the error corrected data stream (106);
detecting the first start-packet short address word (202a) associated with a first device (97a);
in response to detecting the first start-packet short address word associated with the first device, beginning the routing of subsequently received device-specific control data (204a) to the first device;
detecting the second start end-packet short address word (202b) associated with the second device (97b); and
in response to detecting the second start end-packet short address word associated with the second device;
discontinuing the routing of subsequently received device-specific control data (204a) to the first device (97a), and
beginning the routing of subsequently received device-specific control data (204b) to the second device (97b).

43. The system of Claim 42, wherein the protocol handler (93) is further operative for:
detecting a start-packet begin-long-address word (210);
detecting a first occurrence of a long address associated (212) with a third device (97c);
detecting a start-packet end-long-address word (214);
beginning the routing of subsequently received device-specific control data (216) to the third device (97c);
detecting a further address word (172); and
in response to detecting the further address word, discontinuing the routing of subsequently received device-specific control data (216) to the third device (97c).

44. The system of any of Claims 30-43, wherein the device-specific control data for the first, second, and third devices are selected from the following:
voice data for transmission to a controlled device, the voice data configured to cause the controlled device to behave as a character in a scene defined by programming information defined by the video signal;
motor control data for transmission to a controlled device, the motor control data configured to cause the controlled device to behave as a character in a scene defined by programming information defined by the video signal;
electronic mail for a transmission to a computer system;
intercom information for transmission to an intercom system;
telephone paging information for transmission to a paging system;
language translation data for transmission to a display device;
advertising information for transmission to a display device;
subscription information for transmission to a display device; and
emergency warning information for transmission to a display device.

45. A computer storage medium storing computer-executable instructions that when executed by a processor, perform the steps of:
concatenating encoded data (101) with lines of a video signal (102) to create an encoded video signal (104), the encoded data (101) being configured to define content data (158) in association with each frame, said content data (158) including:
a first address (172a) associated with a first device (97a);
device-specific control (174a) data for the first device (97a);
a second address (172b) associated with a second device (97b); and
device-specific control data (174b) for the second device (97b); and
encoding the content data in a horizontal overscan portion (127, 130) of the video signal (102).

46. The system of Claim 30, wherein said video data encoder (76) comprises:
a memory in which a plurality of machine instructions defining the parent application are stored and;
a display; and said means comprises
a processor that is coupled to the memory to access the machine instructions and to the display, said processor executing said machine instructions and thereby implementing a plurality of functions, including:
concatenating encoded data (101) with lines of a video signal (102) to create the encoded video signal (104), the encoded data (101) being configured to define said at least one content word (158).

47. The computer storage medium of Claim 45 storing computer-executable instructions, that, when executed by a processor, further performs the steps of:
encoding the content data (158) to define device-specific control data (204a) for causing the first device (97a) to behave as a character in a scene defined by the programming information; and
transmitting the encoded video signal (104) to the first and second devices (97a, 97b).

48. The system of Claim 30, wherein said video data encoder (76) comprises:
a memory in which a plurality of machine instructions defining the parent application are stored;
a display; and
a processor that is coupled to the memory to access the machine instructions and to the display, said processor executing said machine instructions and thereby implementing a plurality of functions, including:
encoding the content words;
transmitting the encoded video signal (104) to the first and second devices (97a, 97b).

49. The method of Claim 26, wherein the step of linking encoded data with the plurality of lines of the video signal to create an encoded video signal (104) comprises the step of linking encoded data with the plurality of lines of the video signal such that the encoded data are not linked with either of:
portions of the video signal corresponding to a vertical blanking interval, and
portions of the video signal corresponding to a visible raster.

50. The method of Claim 26, wherein the step of linking encoded data with the plurality of lines of the video signal to create an encoded video signal (104) comprises the step of linking encoded data with the plurality of lines of the video signal such that the encoded data are not linked with portions of the video signal corresponding to a vertical blanking interval.

51. The method of Claim 26, wherein the second device (97b) comprises a controlled device that does not display data from the video signal.

52. The system of Claim 30, wherein the second device (97b) comprises a controlled device that does not display data from the video signal.

53. The system of Claim 30, wherein said means for creating the encoded video signal (104) produces an encoded video signal in which the encoded data are not concatenated with portions of the video signal corresponding to a vertical blanking interval.

## Patentansprüche

1. Verfahren zum Codieren von Steuerdaten (110) in einem Videosignal (102), das eine Vielzahl von Bildern (152, 154) definiert, wobei jedes Bild eine Vielzahl von Zeilen umfasst, umfassend die Schritte des Verkettens codierter Daten mit den Zeilen des Videosignals, um ein codiertes Videosignal (104) zu erzeugen, und des Konfigurierens der codierten Daten, um Inhaltsdaten in Verbindung mit jedem Bild zu definieren, **gekennzeichnet durch**:
Definieren der Inhaltsdaten, um zu enthalten:
eine erste Adresse (172a), die mit einer ersten Einrichtung (97a) verbunden ist, einrichtungsspezifische Steuerdaten (174a) für die erste Einrichtung,
eine zweite Adresse (172b), die mit einer zweiten Einrichtung (97b) verbunden ist, und
einrichtungsspezifische Steuerdaten (174b) für die zweite Einrichtung, und Codieren der Inhaltsdaten in einem horizontalen Überabtastabschnitt (127, 130) des Videosignals (102).

2. Verfahren nach Anspruch 1, das weiter die folgenden Schritte umfasst:
Als Reaktion auf die erste Adresse, Leiten der einrichtungsspezifischen Steuerdaten für die erste Einrichtung an die erste Einrichtung (97a);
Steuern von Aktionen der ersten Einrichtung entsprechend den einrichtungsspezifischen Steuerdaten für die erste Einrichtung;
als Reaktion auf die zweite Adresse, Leiten der einrichtungsspezifischen Steuerdaten für die zweite Einrichtung an die zweite Einrichtung (97a), und
Steuern von Aktionen der zweiten Einrichtung entsprechend den einrichtungsspezifischen Steuerdaten für die zweite Einrichtung.

3. Verfahren nach einem der Ansprüche 1-2, wobei:
das Videosignal Programminformation definiert, die eine auf einer Anzeigeeinrichtung (57) angezeigte Szene umfasst, und
die enrichtungsspezifischen Steuerdaten für die erste Einrichtung Sprachdaten und Motorsteuerdaten enthalten, die die erste Einrichtung veranlassen, sich wie eine Figur in der auf der Anzeigeeinrichtung angezeigten Szene zu verhalten.

4. Verfahren nach einem der Ansprüche 1-3, wobei die einrichtungsspezifischen Steuerdaten (174b) für die zweite Einrichtung (97b) aus dem Folgenden ausgewählt wird:
Sprachdaten, die die zweite Einrichtung veranlassen, sich wie eine zweite Figur in der auf der Anzeigeeinrichtung angezeigten Szene zu verhalten,
Motorsteuerdaten, die die zweite Einrichtung veranlassen, sich wie eine zweite Figur in der auf der Anzeigeeinrichtung angezeigten Szene zu verhalten,
elektronische Post zum Senden an ein Computersystem,
Gegensprechinformation zu Senden an ein Gegensprechsystem,
Telefon-Rufinformation zum Senden an ein Pagingsystem,
auf der Anzeigeeinrichtung angezeigte Sprachübersetzungsdaten,
auf der Anzeigeeinrichtung angezeigte Werbeinformation,
auf der Anzeigeeinrichtung angezeigte Subskriptionsinformation und
auf der Anzeigeeinrichtung angezeigte Notfallwarninformation.

5. Vorrichtung nach einem der Ansprüche 1-4, wobei die erste Adresse (172a) ein erstes Startpaket-Kurzadresswort (202a) umfasst, und die zweite Adresse (172b) ein zweites Startpaket-Kurzadresswort (202b) umfasst, weiter umfassend den folgenden Schritt:
Interpretieren des zweiten Startpaket-Kurzadresswortes (202b) als ein erstes Endpaket-Kurzadresswort für die erste Einrichtung.

6. Verfahren nach einem der Ansprüche 1-5, wobei die erste Adresse ein Startpaket-Anfang-Langadresswort (210 umfasst, weiter umfassend den Schritt des Konfigurierens der Inhaltsdaten, um Folgendes zu definieren:
ein erstes Vorkommen einer mit der ersten Einrichtung verbundenen Langadresse (212);
ein mit der ersten Einrichtung verbundenes Startpaket-Ende-Langadresswort (214), und
einrichtungsspezifische Steuerdaten (216) für die erste Einrichtung.

7. Verfahren nach einem der Ansprüche 1-6, weiter umfassend den Schritt des Konfigurierens der codierten Daten, um Signalerfassungsdaten (156) zu definieren, wobei jedes Signalerfassungswort umfasst:
eine Vielzahl von Datenbits (160), und
eine Vielzahl von Fehlerkorrekturbits (162), die eine Korrektursequenz definieren, die es erlaubt, einen Einbit-Fehler in den Datenbits zu erfassen und zu korrigieren.

8. Verfahren nach einem der Ansprüche 1-7, wobei:
das Videosignal eine Vielzahl von Zweihalbbild-verschachtelten Bildern (152, 154) umfasst, und
die codierten Daten jedes Halbbildes des Videosignals ein Signalerfassungswort (156) definieren, das im Wesentlichen aus vier Datenbits (160) und drei Fehlerkorrekturbits (162) besteht.

9. Verfahren nach einem der Ansprüche 1-8, wobei die Inhaltsdaten eine Vielzahl von Inhaltswörtern (158) umfassen, wobei jedes Inhaltswort umfasst:
eine Vielzahl von Datenbits (164), und
eine Vielzahl von Fehlerkorrekturbits (166), die eine Korrektursequenz definieren, die es erlaubt, Fehler in den Datenbits zu erfassen und zu korrigieren.

10. Verfahren nach Anspruch 9, wobei jedes Inhaltswort (158) im Wesentlichen aus neun Datenbits (164) und sieben Fehlerkorrekturbits (166) besteht.

11. Verfahren nach einem der Ansprüche 1-10, weiter umfassend den Schritt des Konfigurierens der codierten Daten, um Signalerfassungsdaten zu definieren, die ein in jedes einer Vielzahl von Bildern (152, 154) des Videosignals codiertes Erfassungswort (156) umfassen, und
eine zusammenhängende Serie der Signalerfassungswörter eine dynamische Validationssequenz definiert, in der jedes Signalerfassungswort sich in wenigstens zwei Bits von dem unmittelbar vorangehenden Signalerfassungswort unterscheidet

12. Verfahren nach Anspruch 10, wobei die dynamische Validationssequenz die Binärdarstellung von 8, 1, 10, 3 12, 5, 14, 7 umfasst.

13. Verfahren nach einem der Ansprüche 1-12, wobei:
die codierten Daten eine Vielzahl von Zeilensignalen umfassen, und
jedes Zeilensignal ein oder mehr in dem horizontalen Überabtastabschnitt (127, 130) jeder Zeile des Videosignals codierte Datenbits umfasst

14. Verfahren nach Anspruch 12, wobei jede Zeile des Videosignals einen Farbburst-Abschnitt (124) und einen sichtbaren Rasterabschnitt (126) umfasst, und wobei jedes Zeilensignal einen zwischen dem Farbburst-Abschnitt und dem sichtbaren Rasterabschnitt gelegenen Impuls (127) umfasst

15. Verfahren nach Anspruch 14, wobei jeder Impuls ein einzelnes Bit der codierten Daten definiert.

16. Verfahren nach einem der Ansprüche 1-15, wobei:
das Videosignal eine Vielzahl von Zweihalbbild-verschachtelten Bildern (152, 154) umfasst, und
die codierten Daten jedes Halbbildes des Videosignals ein 7-Bit Signalerfassungswort (156) und 13 16-Bit Inhaltswörter (158) definieren.

17. Verfahren nach Anspruch 14, wobei jeder Impuls (127, 130) moduliert ist, um eine Vielzahl von Bits der codierten Daten zu definieren.

18. Verfahren nach einem der Ansprüche 1-17, wobei jede Zeile des Videosignals einen Farbburst-Abschnitt (124), einen sichtbaren Rasterabschnitt (126) und ein Horizontal-Austastintervall (132) umfasst, und wobei jedes Zeilensignal einen
Vor-sichtbar-Impuls (127), der sich zwischen dem Farbburst-Abschnitt und dem sichtbaren Rasterabschnitt befindet, und einen
Nach-sichtbar-Impuls (130), der sich hinter dem sichtbaren Rasterabschnitt und vor dem Horizontal-Austastabschnitt befindet, umfasst.

19. Verfahren nach Anspruch 18, wobei:
jeder Vor-sichtbar-Impuls (127) ein einzelnes Bit der codierten Daten definiert, und
jeder Nach-sichtbar-Impuls (130) ein einzelnes Bit der codierten Daten definiert.

20. Verfahren nach Anspruch 19, wobei:
jeder Vor-sichtbar-Impuls (127) moduliert ist, um eine Vielzahl von Bits der codierten Daten zu definieren, und
jeder Nach-sichtbar-Impuls (130) moduliert ist, um eine Vielzahl von Bits der codierten Daten zu definieren.

21. Codiertes Videosignal, das umfasst:
ein Videosignal (102), das eine Vielzahl von Bildern (152, 154) definiert, wobei jedes Bild eine Vielzahl von Zeilen umfasst, die codierte Daten (110) enthalten, die mit den Zeilen des Videosignals verkettet sind, **dadurch gekennzeichnet, dass**
die codierten Daten (110) in einem horizontalen Überabtastabschnitt (127, 130) des Videosignals (102) gelegen sind;
die codierten Daten Signalerfassungsdaten (156) und Inhaltsdaten (158) in Verbindung mit jedem Bild definieren;
die Signalerfassungsdaten ein in jedes Bild codiertes Signalerfassungswort definieren, sodass eine zusammenhängende Serie der Signalerfassungswörter eine dynamische Validationssequenz definiert, in der jedes Signalerfassungswort sich in wenigstens zwei Bits von dem unmittelbar vorangehenden Signalerfassungswort untescheidet, und
die Inhaltsdaten definieren:
ein erstes Startpaket-Kurzadresswort (172a), das mit einer ersten Einrichtung (97a) verbunden ist,
einrichtungsspezifische Steuerdaten (174a) für die erste Einrichtung (97a);
ein zweites Startpaket-Kurzadresswort (172b), das mit einer zweiten Einrichtung (97b) verbunden ist, und
einrichtungsspezifische Steuerdaten (174b) für die zweite Einrichtung (97b).

22. Codiertes Videosignal nach Anspruch 21, wobei die Inhaltsdaten weiter definieren:
ein Startpaket-Anfang-Langadresswort (210), das mit einer dritten Einrichtung (97c) verbunden ist;
ein erstes Vorkommen einer Langadress (212), die mit der dritten Einrichtung verbunden ist;
ein Startpaket-Ende-Langadresswort (214), das mit der dritten Einrichtung verbunden ist, und
einrichtungsspezifische Steuerdaten (216) für die dritte Einrichtung.

23. Codiertes Videosignal nach einem der Ansprüche 21-22, wobei:
das Videosignal Programminformation definiert, und
die einrichtungsspezifischen Steuerdaten für die erste Einrichtung die erste Einrichtung veranlassen, sich wie eine Figur in einer durch die Programminformation definierten Szene zu verhalten.

24. Codiertes Videosignal nach einem der Ansprüche 21-23, wobei die codierten Daten eine Vielzahl von Zeilensignalen umfassen, wobei jedes Zeilensignal ein oder mehr in dem horizontalen Überabtastabschnitt (127, 130) jeder Zeile des Videosignals codierte Datenbits umfasst.

25. Codiertes Videosignal nach einem der Ansprüche 21-24, wobei:
die Inhaltsdaten eine Vielzahl von Inhaltswörtern (158) umfassen;
die Signalerfassungsdaten eine Vielzahl von Signalerfassungswörtern (156) umfassen, und
jedes Signalerfassungswort und jedes Inhaltswort
eine Vielzahl von Datenbits (160) und
eine Vielzahl von Fehlerkorrekturbits (162) umfasst, die eine Korrektursequenz definieren, die es erlaubt, Fehler in den Datenbits zu erfassen und zu korrigieren.

26. Verfahren nach Anspruch 1, wobei:
die mit der ersten Einrichtung (97a) verbundene erste Adresse (172a) ein erstes Startpaket-Kurzadresswort (202a) umfasst;
die einrichtungsspezifischen Steuerdaten (174a) für die erste Einrichtung (97a) Daten umfassen, die die erste Einrichtung (97a) veranlassen, sich wie eine Figur in einer durch die Programminformation definierten Szene zu verhalten, und
die mit der zweiten Einrichtung verbundene (97b) verbundene zweite Adresse (172b) ein zweites Startpaket-Kurzadresswort (202b) umfasst

27. Verfahren nach Anspruch 26, wobei die Inhaltsdaten weiter definieren:
ein mit einer dritten Enrichtung (97c) verbundenes Startpaket-Anfang-Langadresswort (210);
eine mit der dritten Einrichtung (97c) verbundene Landadresse (212);
ein mit der dritten Einrichtung (97c) verbundenes Startpaket-Ende-Langadresswort (214), und
einrichtungsspezifische Steuerdaten (216) für die dritte Einrichtung (97c).

28. Verfahren nach einem der Ansprüche 26-27, wobei:
die codierten Daten Signalerfassungsdaten definieren, die ein in jedes der Vielzahl von Bildern (152, 154) des Videosignals (104) codiertes Signalerfassungswort umfassen, und
eine zusammenhängende Serie von Signalerfassungswörtern eine dynamische Validationssequenz definiert, in der jedes Signalerfassungswort sich in wenigstens zwei Bits von dem unmittelbar vorangehenden Signalerfassungswort unterscheidet

29. Verfahren nach einem der Ansprüche 26-28, wobei:
die Inhaltsdaten eine Vielzahl von Inhaltswörtern (158) umfassen, und die Signalerfassungsdaten eine Vielzahl von Signalerfassungswörtern (156) umfassen, wobei jedes Signalerfassungswort und jedes Inhaltswort
eine Vielzahl von Datenbits (160, 164) und
eine Vielzahl von Fehlerkorrekturbits (162, 166) umfasst, die eine Korrektursequenz definieren, die es erlaubt, Fehler in den Datenbits zu erfassen und zu korrigieren.

30. System zum Codieren von Daten (110) in Verbindung mit einem Videosignal (102), das einen Videodaten-Encoder (76) umfasst, der funktional mit einer Videoquelle (56) verbunden ist und ein Videosignal (102) von der Videoquelle (56) empfängt, wobei das Videosignal (102) eine Vielzahl von Bildern (152, 154) definiert, wobei jedes Bild eine Vielzahl von Zeilen umfasst, wobei der Videodaten-Encoder auch die codierten Daten mit der Vielzahl von Zeilen des Videosignals verkettet, um ein codiertes Videosignal (104) zu erzeugen, und
eine Einrichtung zum Erzeugen des codierten Videosignals (104) durch Definieren wenigstens eines Inhaltswortes (158) in Verbindung mit jedem der Vielzahl von Bildern, sodass die codierten Daten eine Vielzahl von Zeilensignalen umfassen, wobei jedes Zeilensignal ein oder mehr in dem horizontalen Überabtastabschnitt (127, 130) jeder Zeile des Videosignals (102) codierte Bits umfasst, und
die Inhaltswörter definieren:
ein erstes Startpaket-Kurzadresswort (202a), das mit einer ersten Einrichtung (97a) verbunden ist;
einrichtungsspezifische Steuerdaten (204a) für die erste Einrichtung (97a);
ein zweites Startpaket-Kurzadresswort (202b), das mit einer zweiten Einrichtung (97b) verbunden ist, und
einrichtungsspezifische Steuerdaten (204b) für die zweite Einrichtung (97b).

31. System nach Anspruch 30, wobei
das Videosignal (104) Programminformation definiert, und
die einrichtungsspezifischen Steuerdaten (204a) für die erste Einrichtung (97a) die erste Einrichtung veranlassen, sich wie eine Figur in einer durch die Programminformation definierten Szene zu verhalten.

32. System nach einem der Ansprüche 30-31, wobei die besagte Einrichtung des Weiteren ein Signalerfassungswort (156) definiert

33. System nach einem der Ansprüche 30-32, wobei jede Zeile des Videosignals einen Farbburst-Abschnitt (124) und einen sichtbaren Rasterabschnitt (126) umfasst, und wobei jedes Zeilensignal einen zwischen dem Farbburst-Abschnitt und dem sichtbaren Rasterabschnitt gelegenen Impuls (127) umfasst.

34. System nach Anspruch 33, wobei jeder Impuls ein einzelnes Bit der codierten Daten definiert

35. System nach einem der Ansprüche 30-34, wobei:
das Videosignal eine Vielzahl von Zweihalbbild-verschachtelten Bildern (152, 154) definiert, und
die codierten Daten jedes Halbbildes des Videosignals ein Signalerfassungswort (156) und 13 Inhaltswörter (158) definieren.

36. System nach Anspruch 33, wobei jeder Impuls (127, 130) moduliert ist, um eine Vielzahl von Bits der codierten Daten zu definieren.

37. System nach einem der Ansprüche 30-36, wobei jede Zeile des Videosignals einen Farbburst-Abschnitt (124), einen sichtbaren Rasterabschnitt (126) und ein Horizontal-Austastintervall (132) umfasst, und wobei jedes Zeilensignal umfasst:
einen Vor-sichtbar-Impuls (127), der sich zwischen dem Farbburst-Abschnitt und dem sichtbaren Rasterabschnitt befindet, und
einen Nach-sichtbar-Impuls (130), der sich hinter dem sichtbaren Rasterabschnitt und vor dem Horizontal-Austastintervall befindet

38. System nach Anspruch 37, wobei:
jeder Vor-sichtbar-Impuls (127) ein einzelnes Bit der codierten Daten definiert, und
jeder Nach-sichtbar-Impuls (130) ein einzelnes der codierten Daten definiert.

39. System nach Anspruch 38, wobei:
jeder Vor-sichtbar-Impuls (127) moduliert ist, um eine Vielzahl von Bits der codierten Daten zu definieren, und
jeder Nach-sichtbar Impuls (130) moduliert ist, um eine Vielzahl von Bits der codierten Daten zu definieren.

40. System nach Anspruch 32, weiter umfassend einen Datendetektor (91), der funktional mit dem Videodaten-Encoder (76) verbunden und tätig ist zum:
Empfangen des codierten Videosignals (104) von dem Videodaten-Encoder;
Erfassen der Anwesenheit des Signalerfassungswortes (156);
Extrahieren der Inhaltswörter (158) aus dem codierten Videosignal, und
Zusammensetzen der Inhaltswörter (158) zu einem seriellen Datenkommunikationsignal (106).

41. System nach Anspruch 40, weiter umfassend einen Datenfehler-Prozessor (99), der funktional mit dem Datendetektor (91) verbunden und tätig ist zum:
Empfangen des seriellen Datenkommunikationssignals (106) von dem Datendetektor (91);
Zerlegen des seriellen Datenkommunikationssignals (106) in Datenbits (160, 164) und Fehlerkorrekturbits (162, 166);
Analysieren der Fehlerkorrekturbits (162, 164), um Fehler in den Datenbits (160, 164) zu erfassen;
Korrigieren von erfassten Fehlern in den Datenbits (160, 164), und
Zusammensetzen der korrigierten Datenbits (106, 164) zu einem fehlerkorrigierten Datenstrom (108).

42. System nach Anspruch 41, weiter umfassend einen Protokoll-Handhaber (93), der funktional mit dem Datenfehler-Prozessor (99) verbunden und tätig ist zum:
Empfangen des fehlerkorrigierten Datenstromes (106);
Erfassen des mit einer ersten Einrichtung (97a) verbundenen ersten Startpaket-Kurzadresswortes (202a);
als Reaktion auf das Erfassen des mit der ersten Einrichtung verbundenen ersten Startpaket-Kurzadresswortes, Beginnen des Leitens von nachfolgend empfangenen einrichtungsspezifischen Steuerdaten (204a) an die erste Einrichtung;
Erfassen des mit der zweiten Einrichtung (97b) verbundenen zweiten Start-Endpaket-Kurzadresswortes (202b), und
als Reaktion auf das Erfassen des mit der zweiten Einrichtung verbundenen zweiten Start-Endpaket-Kurzadresswortes, Unterbrechen des Leitens von nachfolgend empfangenen einrichtungsspezifischen Steuerdaten (204a) an die erste Einrichtung (97a), und
Beginnen des Leitens von nachfolgend empfangenen einrichtungsspezifischen Steuerdaten an die zweite Einrichtung (97b).

43. System nach Anspruch 42, wobei der Protokoll-Handhaber (93) weiter tätig ist zum:
Erfassen eines Startpaket-Anfang-Langadresswortes (210);
Erfassen eines ersten Vorkommens einer mit einer dritten Einrichtung (97c) verbundenen Langadresse (212);
Erfassen eines Startpaket-Ende-Langadresswortes (214);
Beginnen des Leitens von nachfolgend empfangenen einrichtungsspezifischen Steuerdaten (216) an die dritte Einrichtung (97c);
Erfassen eines weiteren Adresswortes (172), und
als Reaktion auf das Erfassen des weiteren Adresswortes, Unterbrechen des Leitens von nachfolgend empfangenen einrichtungsspezifischen Steuerdaten (216) an die dritte Einrichtung (97c).

44. System nach einem der Ansprüche 30-43, wobei die einrichtungsspeziftschen Steuerdaten für die erste, zweite und dritte Einrichtung aus dem Folgenden ausgewählt werden:
Sprachdaten zum Senden an eine gesteuerte Einrichtung, wobei die Sprachdaten konfiguriert sind, die gesteuerte Einrichtung zu veranlassen, sich wie eine Figur in einer Szene zu verhalten, die durch Programminformation definiert wird, die durch das Videosignal definiert wird;
Motorsteuerdaten zum Senden an eine gesteuerte Einrichtung, wobei die Motorsteuerdaten konfiguriert sind, die gesteuerte Einrichtung zu veranlassen, sich wie eine Figur in einer Szene zu verhalten, die durch Programminformation definiert wird, die durch das Videosignal definiert wird;
elektronische Post zum Senden an ein Computersystem,
Gegensprechinformation zu Senden an ein Gegensprechsystem,
Telefon-Rufinformation zum Senden an ein Pagingsystem,
Sprachübersetzungsdaten zum Senden an eine Anzeigeeinrichtung,
Werbeinformation zum Senden an eine Anzeigeeinrichtung;
Subskriptionsinformation zum Senden an eine Anzeigeeinrichtung, und
Notfallwarninformation zum Senden an eine Anzeigeeinrichtung.

45. Computer-Speichermedium, das computerausführbare Anweisungen speichert, die, wenn von einem Prozessor ausgeführt, die folgenden Schritte durchführen:
Verketten codierter Daten (101) mit Zeilen eines Videosignals (102), um ein codiertes Videosignal (104) zu erzeugen, wobei die codierten Daten (101) konfiguriert sind, Inhaltsdaten (158) in Verbindung mit jedem Bild zu definieren, wobei die Inhaltsdaten (158) umfassen:
eine mit einer ersten Einrichtung (97a) verbundene erste Adresse (172a);
einrichtungsspezifische Steuerdaten (174a) für die erste Einrichtung (97a);
eine mit einer zweiten Einrichtung (97b) verbundene zweite Adresse (172b);
einrichtungsspezifische Steuerdaten (174b) für die zweite Einrichtung (97b), und
Codieren der Inhaltsdaten in einem horizonalen Überabtastabschnitt (127, 130) des Videosignals (102).

46. System nach Anspruch 30, wobei der Videodaten-Encoder (76) umfasst:
einen Speicher, in dem eine Vielzahl von Maschinenanweisungen, die die Quellenanwendung definieren, gespeichert ist, und
eine Anzeige,
und die besagte Einrichtung umfasst:
einen Prozessor, der mit dem Speicher verbunden ist, um auf die Maschinenanweisungen und auf die Anzeige zuzugreifen, wobei der Prozessor die Maschinenanweisungen ausführt und dadurch eine Vielzahl von Funktionen implementiert, die umfassen:
Verketten codierter Daten (101) mit Zeilen eines Videosignals (102), um das codierte Videosignal (104) zu erzeugen, wobei die codierten Daten (101) konfiguriert sind, wenigstens ein Inhaltswort (158) zu definieren.

47. Computer-Speichermedium nach Anspruch 45, das computerausführbare Anweisungen speichert, die, wenn von einem Prozessor ausgeführt, weiter die folgenden Schritte durchführen:
Codieren der Inhaltsdaten (158), um einrichtungsspezifische Steuerdaten (204a) zu definieren, um die erste Einrichtung (97a) zu veranlassen, sich wie eine Figur in einer durch die Programminformation definierten Szene zu verhalten, und
Senden des codierten Videosignals (104) an die erste und zweite Einrichtung (97a, 97b).

48. System nach Anspruch 30, wobei der Videodaten-Encoder (76) umfasst
einen Speicher, in dem eine Vielzahl von Maschinenanweisungen, die die Quellenanwendung definieren, gespeichert ist;
eine Anzeige, und
einen Prozessor, der mit dem Speicher verbunden ist, um auf die Maschinenanweisungen und auf die Anzeige zuzugreifen, wobei der Prozessor die Maschinenanweisungen ausführt und dadurch eine Vielzahl von Funktionen implementiert, die umfassen:
Codieren der Inhaltswörter,
Senden des codierten Videosignals (104) an die erste und zweite Einrichtung (97a, 97b).

49. Verfahren nach Anspruch 26, wobei der Schritt des Verbindens von codierten Daten mit der Vielzahl von Zeilen des Videosignals, um ein codiertes Videosignal (104) zu erzeugen, den Schritt des Verbindens von codierten Daten mit der Vielzahl von Zeilen des Videosignals umfasst, sodass die codierten Daten mit dem Folgenden nicht verbunden werden:
Abschnitte des Videosignals, die einem Vertikal-Austastintervall entsprechen, und
Abschnitte des Videosignals, die einem sichtbaren Raster entsprechen.

50. Verfahren nach Anspruch 26, wobei der Schritt des Verbindens von codierten Daten mit der Vielzahl von Zeilen des Videosignals, um ein codiertes Videosignal (104) zu erzeugen, den Schritt des Verbindens von codierten Daten mit der Vielzahl von Zeilen des Videosignals umfasst, sodass die codierten Daten nicht mit Abschnitten des Videosignals verbunden werden, die einem Vertikal-Austastintervall entsprechen.

51. Verfahren nach Anspruch 26, wobei die zweite Einrichtung (97b) eine gesteuerte Einrichtung umfasst, die Daten von dem Videosignal nicht anzeigt.

52. System nach Anspruch 30, wobei die zweite Einrichtung (97b) eine gesteuerte Einrichtung umfasst, die Daten von dem Videosignal nicht anzeigt.

53. System nach Anspruch 30, wobei die Einrichtung zum Erzeugen des codiertes Videosignals (104) ein codiertes Videosignal erzeugt, in dem die codierten Daten nicht mit Abschnitten des Videosignals verkettet werden, die einem Vertikal-Austastintervall entsprechen.

## Revendications

1. procédé de codage de données de commande (110) dans un signal vidéo (102) délimitant plusieurs images (152, 154), chaque image comprenant plusieurs lignes, le procédé comprenant des étapes de chaînage de données codées avec les lignes du signal vidéo pour la création d'un signal vidéo codé (104), et la mise des données codées à une configuration qui définit des données de contenu associées à chaque image, **caractérisé par** :
la définition des données de contenu afin qu'elles contiennent
une première adresse (172a) associée à un premier dispositif (97a),
des données de commande (174a) spécifiques du premier dispositif,
une seconde adresse (172b) associée à un second dispositif (97b), et
des données de commande (174b) spécifiques à un second dispositif, et
le codage des données de contenu dans une partie de balayage complémentaire horizontal (127, 130) du signal vidéo (102).

2. Procédé selon la revendication 1, comprenant en outre les étapes suivantes :
en réponse à la première adresse, l'acheminement des données de commande spécifiques du premier dispositif vers le premier dispositif (97a),
la commande des actions du premier dispositif en fonction des données de commande spécifiques du premier dispositif,
en réponse à la seconde adresse, l'acheminement des données de commande spécifiques du second dispositif vers le second dispositif (97b), et
la commande des actions du second dispositif en fonction des données de commande spécifiques du second dispositif.

3. Procédé selon l'une des revendications 1 et 2, dans lequel :
le signal vidéo délimite des informations de programmation qui comprennent une scène affichée sur un dispositif d'affichage (57), et
les données de commande spécifiques du premier dispositif comprennent des données vocales et des données de commande de moteur qui provoquent le comportement du premier dispositif à la manière d'un personnage de la scène affichée sur le dispositif d'affichage.

4. Procédé selon l'une quelconque des revendications 1 à 3, dans lequel les données de commande (174b) spécifiques du second dispositif (97b) sont sélectionnées parmi les suivantes :
des données vocales qui provoquent le comportement du second dispositif comme un second personnage de la scène affichée sur le dispositif d'affichage,
des données de commande de moteur qui provoquent le comportement du second dispositif comme un second personnage de la scène affichée sur le dispositif d'affichage,
un message électronique destiné à être transmis à un système d'ordinateur,
des informations d'intercommunications destinées à être transmises à un système d'intercommunications,
des informations de localisation téléphonique destinées à être transmises à un système de localisation téléphonique,
des données de traduction de langue affichées sur le dispositif d'affichage,
des informations publicitaires affichées sur le dispositif d'affichage,
des informations d'abonnement affichées sur le dispositif d'affichage, et
des informations d'avertissement d'urgence affichées sur le dispositif d'affichage.

5. Procédé selon l'une quelconque des revendications 1 à 4, dans lequel la première adresse (172a) comprend un premier mot d'adresse courte (202a) de début de paquet et la seconde adresse (172b) comporte un second mot d'adresse courte (202b) de début de paquet, le procédé comprenant en outre l'étape suivante :
l'interprétation du second mot d'adresse courte (202b) de début de paquet comme premier mot d'adresse courte de fin de paquet pour le premier dispositif.

6. Procédé selon l'une quelconque des revendications 1 à 5, dans lequel la première adresse comprend un mot (210) de début d'adresse longue de début de paquet, le procédé comprenant en outre une étape de mise des données de contenu à une configuration qui définit :
une première apparition d'une adresse longue (212) associée au premier dispositif,
un mot de fin d'adresse longue (214) de début de paquet associé au premier dispositif, et
des données de commande (216) spécifiques du premier dispositif.

7. Procédé selon l'une quelconque des revendications 1 à 6, comprenant en outre l'étape suivante :
la mise des données codées à une configuration qui définit les données de détection de signaux (156), chaque mot de détection de signaux comprenant :
plusieurs bits de données (160), et
plusieurs bits (162) de correction d'erreurs qui définissent une séquence de correction qui permet la détection et la correction d'une erreur à un seul bit dans les bits de données.

8. Procédé selon l'une quelconque des revendications 1 à 7, dans lequel :
le signal vidéo comprend plusieurs images à deux trames entrelacées (152, 154), et
les données codées de chaque trame du signal vidéo définissent un mot (156) de détection de signaux essentiellement formé de quatre bits de données (160) et de trois bits de correction d'erreurs (162).

9. Procédé selon l'une quelconque des revendications 1 à 8, dans lequel les données de contenu comprennent plusieurs mots de contenu (158), chaque mot de contenu comprenant
plusieurs bits de données (164), et
plusieurs bits de correction d'erreurs (166) qui définissent une séquence de correction qui permet la détection et la correction des erreurs des bits de données.

10. Procédé selon la revendication 9, dans lequel chaque mot de contenu (158) est constitué essentiellement de 9 bits de données (164) et de 7 bits de correction d'erreurs (166).

11. Procédé selon l'une quelconque des revendications 1 à 10, comprenant en outre l'étape suivante :
la mise des données codées à une configuration qui définit des données de détection de signaux comprenant un mot de détection de signaux (156) codés dans chacune de plusieurs images (152, 154) du signal vidéo, et
une série consécutive de mots de détection de signaux définit une séquence dynamique de validation dans laquelle chaque mot de détection de signaux varie d'au moins 2 bits par rapport au mot de détection de signaux qui le précède immédiatement.

12. Procédé selon la revendication 10, dans lequel la séquence dynamique de validation comprend la représentation binaire de 8, 1, 10, 3, 12, 5, 14, 7.

13. Procédé selon l'une quelconque des revendications 1 à 12, dans lequel
les données codées comprennent plusieurs signaux de ligne, et
chaque signal de ligne comporte un ou plusieurs bits de données codées dans la partie de balayage complémentaire horizontal (127, 130) de chaque ligne du signal vidéo.

14. Procédé selon la revendication 12, dans lequel chaque ligne du signal vidéo comporte une partie (124) de salve de couleur et une partie (126) de trame visible, et dans lequel chaque signal de ligne comprend une impulsion (127) placée entre la partie de salve de couleur et la partie de trame visible.

15. Procédé selon la revendication 14, dans lequel chaque impulsion définit un bit unique des données codées.

16. Procédé selon l'une quelconque des revendications 1 à 15, dans lequel :
le signal vidéo comporte plusieurs images à deux trames entrelacées (152, 154), et
les données codées de chaque trame du signal vidéo délimitent un mot de détection de signaux (156) à 7 bits et treize mots de contenu (158) à 16 bits.

17. Procédé selon la revendication 14, dans lequel chaque impulsion (127, 130) est modulée pour qu'elle définisse plusieurs bits des données codées.

18. Procédé selon l'une quelconque des revendications 1 à 17, dans lequel chaque ligne du signal vidéo comporte une partie (124) de salve de couleur, une partie (126) de trame visible, et un intervalle de suppression horizontale (132), et dans lequel chaque signal de ligne comprend
une impulsion (127) antérieure à la partie visible, disposée entre la partie de salve de couleur et la partie de trame visible, et
une impulsion (130) postérieure à la partie visible, disposée après la partie de trame visible et avant l'intervalle de suppression horizontale.

19. Procédé selon la revendication 18, dans lequel :
chaque impulsion (127) placée avant la partie visible définit un seul bit des données codées, et
chaque impulsion (130) placée après la partie visible définit un seul bit des données codées.

20. Procédé selon la revendication 19, dans lequel :
chaque impulsion (127) placée avant la partie visible est modulée afin qu'elle délimite plusieurs bits de données codées, et
chaque impulsion (130) placée après la partie visible est modulée afin qu'elle définisse plusieurs bits des données codées.

21. Signal vidéo codé (104), comprenant :
un signal vidéo (102) qui définit plusieurs images (152, 154), chaque image comprenant plusieurs lignes contenant des données codées (110) chaînées avec les lignes du signal vidéo, **caractérisé en ce que**
les données codées (110) se trouvent dans une partie de balayage complémentaire horizontal (127, 130) du signal vidéo (102),
les données codées définissent des données de détection de signaux (156) et des données de contenu (158) en association avec chaque image,
les données de détection de signaux définissent un mot de détection de signaux codés dans chaque image de manière qu'une série consécutive de mots de détection de signaux définisse une séquence dynamique de validation dans laquelle chaque mot de détection de signaux varie d'au moins 2 bits par rapport à un mot de détection de signaux qui le précède immédiatement, et
les données de contenu définissent
un premier mot d'adresse courte (172a) de début de paquet associé à un premier dispositif (97a),
des données de commande (174a) spécifiques du premier dispositif (97a),
un second mot d'adresse courte (172b) de début de paquet associé à un second dispositif (97b), et
des données de commande (174b) spécifiques du second dispositif (97b).

22. Signal vidéo codé selon la revendication 21, dans lequel les données de contenu définissent en outre :
un mot (210) de début d'adresse longue de début de paquet associé à un troisième dispositif (97c),
une première apparition d'une adresse longue (212) associée au troisième dispositif,
un mot (214) de fin d'adresse longue de début de paquet associé au troisième dispositif, et
des données de commande (216) spécifiques du troisième dispositif.

23. Signal vidéo codé selon l'une des revendications 21 et 22, dans lequel :
le signal vidéo définit des informations de programmation, et
les données de commande spécifiques du premier dispositif provoquent le comportement du premier dispositif comme un personnage d'une scène définie par les informations de programmation.

24. Signal vidéo codé selon l'une quelconque des revendications 21 à 23, dans lequel les données codées comprennent plusieurs signaux de ligne tels que chaque signal de ligne comprend un ou plusieurs bits de données codées dans la partie de balayage complémentaire horizontal (127, 130) de chaque ligne du signal vidéo.

25. Signal vidéo codé selon l'une quelconque des revendications 21 à 24, dans lequel :
les données de contenu comprennent plusieurs mots de contenu (158),
les données de détection de signaux comprennent plusieurs mots de détection de signaux (156), et
chaque mot de détection de signaux et chaque mot de contenu comprennent
plusieurs bits de données (160), et
plusieurs bits de correction d'erreurs (162) définissant une séquence de correction qui permet la détection et la correction des erreurs des bits de données.

26. Procédé selon la revendication 1, dans lequel :
la première adresse (172a) associée au premier dispositif (97a) comprend un premier mot d'adresse courte (202a) de début de paquet,
les données de commande (174a) spécifiques du premier dispositif (97a) comprennent des données destinées à provoquer le comportement du premier dispositif (97a) comme un personnage d'une scène définie par les informations de programmation, et
la seconde adresse (172b) associée au second dispositif (97b) comprend un second mot d'adresse courte (202b) de début de paquet.

27. Procédé selon la revendication 26, dans lequel les données de contenu définissent en outre :
un mot de début d'adresse longue (210) de début de paquet associé à un troisième dispositif (97c),
une adresse longue (212) associée au troisième dispositif (97c),
un mot de fin d'adresse longue (214) de début de paquet associé au troisième dispositif (97c), et
des données de commande (216) spécifiques du troisième dispositif (97c).

28. Procédé selon l'une des revendications 26 et 27, dans lequel :
les données codées définissent des données de détection de signaux comprenant un mot de détection de signaux (156) codé dans chacune de plusieurs images (152, 154) du signal vidéo (104), et
une série consécutive de mots de détection de signaux définit une séquence dynamique de validation dans laquelle chaque mot de détection de signaux varie d'au moins deux bits par rapport au mot de détection de signaux le précédant immédiatement.

29. Procédé selon l'une quelconque des revendications 26 à 28, dans lequel :
les données de contenu comprennent plusieurs mots de contenu (158) et les données de détection de signaux comprennent plusieurs mots de détection de signaux (156), chaque mot de détection de signaux et chaque mot de contenu comprenant :
plusieurs bits de données (160, 164), et
plusieurs bits de correction d'erreurs (162, 166) définissant une séquence de correction qui permet la détection et la correction des erreurs des bits de données.

30. Système de codage de données (110) associé à un signal vidéo (102), comprenant un codeur (76) de données vidéo connecté fonctionnellement à une source vidéo (56) et destiné à recevoir un signal vidéo (102) de la source vidéo (56), le signal vidéo (102) définissant plusieurs images (152, 154), chaque image comprenant plusieurs lignes, le codeur de données vidéo chaînant aussi les données codées à plusieurs lignes du signal vidéo pour la création d'un signal vidéo codé (104),
un dispositif destiné à créer le signal vidéo codé (104) par définition d'au moins un mot de contenu (158) en association avec chacune des images, si bien que les données codées comprennent plusieurs signaux de ligne tels que chaque signal de ligne comprend un ou plusieurs bits codés dans la partie de balayage complémentaire horizontal (127, 130) de chaque ligne du signal vidéo (102), et
les mots de contenu définissent :
un premier mot d'adresse courte (202a) de début de paquet associé à un premier dispositif (97a),
des données de commande (204a) spécifiques du premier dispositif (97a),
un second mot d'adresse courte (202b) de début de paquet associé à un second dispositif (97b), et
des données de commande (204b) spécifiques du second dispositif (97b).

31. Système selon la revendication 30, dans lequel :
le signal vidéo (104) définit des informations de programmation, et
les données de commande (202a) spécifiques du premier dispositif (97a) provoquent le comportement du premier dispositif comme un personnage d'une scène définie par les informations de programmation.

32. Système selon l'une des revendications 30 et 31, dans lequel le dispositif définit en outre un mot de détection de signaux (156).

33. Système selon l'une quelconque des revendications 30 à 32, dans lequel chaque ligne du signal vidéo comporte une partie (124) de salve de couleur et une partie (126) de trame visible, et dans lequel chaque signal de ligne comporte une impulsion (127) placée entre la partie de salve de couleur et la partie de trame visible.

34. Système selon la revendication 23, dans lequel chaque impulsion définit un bit unique des données codées.

35. Système selon l'une quelconque des revendications 30 à 34, dans lequel :
le signal vidéo définit plusieurs images à deux trames entrelacées (152, 154), et
les données codées de chaque trame du signal vidéo définissent un mot de détection de signaux (156) et treize mots de contenu (158).

36. Système selon la revendication 33, dans lequel chaque impulsion (127, 130) est modulée pour définir plusieurs bits des données codées.

37. Système selon l'une quelconque des revendications 30 à 36, dans lequel chaque ligne du signal vidéo comporte une partie de salve de couleur (124), une partie de trame visible (126), et un intervalle de suppression horizontale (132), et dans lequel chaque signal de ligne comprend :
une impulsion (127) placée avant la partie visible entre la partie de salve de couleur et la partie de trame visible, et
une impulsion (130) postérieure à la partie visible placée après la partie de trame visible et avant l'intervalle de suppression horizontale.

38. Système selon la revendication 37, dans lequel :
chaque impulsion (127) placée avant la partie visible définit un seul bit des données codées, et
chaque impulsion (130) placée après la partie visible définit un seul bit des données codées.

39. Système selon la revendication 38, dans lequel :
chaque impulsion (127) placée avant la partie visible est modulée afin qu'elle définisse plusieurs bits des données codées, et
chaque impulsion (130) placée après la partie visible est modulée afin qu'elle définisse plusieurs bits des données codées.

40. Système selon la revendication 32, comprenant en outre un détecteur de données (91) connecté fonctionnellement au codeur de données vidéo (76) et destiné à :
recevoir le signal vidéo codé (104) du codeur de données vidéo,
détecter la présence du mot de détection de signaux (156),
extraire les mots de contenu (158) du signal vidéo codé, et
assembler les mots de contenu (158) dans un signal de communication de données en série (106).

41. Système selon la revendication 40, comprenant en outre un processeur d'erreur de données (99) connecté fonctionnellement au détecteur de données (91) et destiné à :
recevoir le signal de communication de données en série (106) du décodeur de données (91),
analyser le signal de communication de données en série (106) sous forme de bits de données (160, 164) et de bits de correction d'erreurs (162, 166),
analyser les bits de correction d'erreurs (162, 164) pour la détection des erreurs dans les bits de données (160, 164),
corriger les erreurs détectées dans les bits de données (160, 164), et
assembler les bits de données corrigées (160, 164) sous forme d'un courant de données (108) dont les erreurs sont corrigées.

42. Système selon la revendication 41, comprenant en outre un gestionnaire de protocole (93) connecté fonctionnellement au processeur d'erreurs de données (99) et destiné à :
recevoir le courant de données (106) dont les erreurs sont corrigées,
détecter le premier mot d'adresse courte (202a) de début de paquet associé à un premier dispositif (97a),
en réponse à la détection du premier mot d'adresse courte de début de paquet associé au premier dispositif, commencer l'acheminement des données de commande (204a) spécifiques du premier dispositif reçu ensuite,
détecter le second mot d'adresse courte (202b) de fin de paquet associé au second dispositif (97b), et
en réponse à la détection du second mot d'adresse courte de fin de paquet associé au second dispositif :
interrompre l'acheminement des données de commande (204a) spécifiques du premier dispositif (97a) reçues ensuite, et
commencer l'acheminement des données de commande (204a) spécifiques du second dispositif (97b) reçues ensuite.

43. Système selon la revendication 42, dans lequel le gestionnaire de protocole (93) est en outre destiné à :
détecter un mot de début d'adresse longue (210) de début de paquet,
détecter une première apparition d'une adresse longue (212) associée à un troisième dispositif (97c),
détecter un mot de fin d'adresse longue (214) de début de paquet,
commencer l'acheminement des données de commande (216) spécifiques du troisième dispositif (97c) reçues ensuite,
détecter un mot d'adresse supplémentaire (172), et
en réponse à la détection d'un mot d'adresse supplémentaire, interrompre l'acheminement des données de commande (216) spécifiques du troisième dispositif (97c) reçues ensuite.

44. Système selon l'une quelconque des revendications 30 à 43, dans lequel les données de commande spécifiques des premier, second et troisième dispositifs sont sélectionnées parmi les suivantes :
des données vocales destinées à être transmises à un dispositif commandé, les données vocales ayant une configuration qui provoque le comportement du dispositif commandé comme un personnage d'une scène définie par des informations de programmation définies par le signal vidéo,
des données de commande de moteur destinées à être transmises à un dispositif commandé, les données de commande de moteur ayant une configuration qui provoque le comportement du dispositif commandé comme un personnage d'une scène définie par les informations de programmation définies par le signal vidéo,
un message électronique destiné à être transmis à un système d'ordinateur,
des informations d'intercommunications destinées à être transmises à un système d'intercommunications,
des informations de localisation de personne par téléphone destinées à être transmises à un système de localisation de personne,
des données de traduction de langue destinées à être transmises à un dispositif d'affichage,
des informations publicitaires destinées à être transmises à un dispositif d'affichage,
des informations d'abonnement destinées à être transmises à un dispositif d'affichage, et
des informations d'avertissement d'urgence destinées à être transmises à un dispositif d'affichage.

45. Support de mémorisation pour ordinateur, mémorisant des instructions exécutables par ordinateur et qui, lorsqu'elles sont exécutées par un processeur, exécutent les étapes suivantes :
le chaînage de données codées (101) avec des lignes d'un signal vidéo (102) pour la création d'un signal vidéo codé (104), les données codées (101) ayant une configuration destinée à définir des données de contenu (158) associées à chaque image, les données de contenu (158) comprenant :
une première adresse (172a) associée à un premier dispositif (97a),
des données de commande (174a) spécifiques du premier dispositif (97a),
une seconde adresse (172b) associée au second dispositif (97b), et
des données de commande (174b) spécifiques du second dispositif (97b), et
le codage des données de contenu dans une partie de balayage complémentaire horizontal (127, 130) du signal vidéo (102).

46. Système selon la revendication 30, dans lequel le codeur de données vidéo (76) comporte :
une mémoire dans laquelle sont conservées plusieurs instructions de machine définissant l'application mère, et
un dispositif d'affichage, ledit dispositif de création comporte :
un processeur couplé à la mémoire afin qu'elle ait accès aux instructions de la machine et à l'affichage, le processeur exécutant les instructions de la machine et remplissant plusieurs fonctions comprenant :
le chaînage de données codées (101) avec des lignes d'un signal vidéo (102) pour la création du signal vidéo codé (104), les données codées (101) ayant une configuration qui définit le mot de contenu au moins (158).

47. Support de mémorisation pour ordinateur selon la revendication 45, qui mémorise les instructions exécutables par ordinateur et qui, lors de l'exécution par un processeur, exécute en outre les étapes suivantes :
le codage des données de contenu (158) pour la définition des données de commande (204a) spécifiques du dispositif destiné à provoquer le comportement du premier dispositif (97a) comme un personnage dans une scène définie par les informations de programmation, et
la transmission du signal vidéo codé (104) aux premier et second dispositifs (97a, 97b).

48. Système selon la revendication 30, dans lequel le codeur de données vidéo (76) comporte :
une mémoire dans laquelle sont conservées plusieurs instructions de machine définissant l'application mère,
un dispositif d'affichage, et
un processeur couplé à la mémoire afin qu'il ait accès aux instructions de la machine et à l'affichage, le processeur exécutant les instructions de la machine et remplissant ainsi plusieurs fonctions qui comprennent :
le codage des mots de contenu, et
la transmission du signal vidéo codé (104) aux premier et second dispositifs (97a, 97b).

49. Procédé selon la revendication 26, dans lequel l'étape de liaison de données codées à plusieurs lignes du signal vidéo pour la création d'un signal vidéo codé (104) comprend l'étape de liaison de données codées à plusieurs lignes du signal vidéo de manière que les données codées ne soient pas liées
soit à des parties du signal vidéo qui correspondent à un intervalle de suppression verticale,
soit à des parties du signal vidéo qui correspondent à une trame visible.

50. Procédé selon la revendication 26, dans lequel l'étape de liaison de données codées à plusieurs lignes du signal vidéo pour la création d'un signal vidéo codé (104) comprend l'étape de liaison de données codées à plusieurs lignes du signal vidéo de manière que les données codées ne soient pas liées à des parties du signal vidéo qui correspondent à un intervalle de suppression verticale.

51. Procédé selon la revendication 26, dans lequel le second dispositif (97b) est un dispositif commandé qui n'affiche pas des données provenant du signal vidéo.

52. Système selon la revendication 30, dans lequel le second dispositif (97b) est un dispositif commandé qui n'affiche pas des données du signal vidéo.

53. Système selon la revendication 30,dans lequel le dispositif destiné à créer le signal vidéo codé (104) produit un signal vidéo codé dans lequel les données codées ne sont pas chaînées avec des parties du signal vidéo qui correspondent à un intervalle de suppression verticale.
